**Europäisches Patentamt**

**European Patent Office**

**Office européen des brevets**

(19)

(11) Veröffentlichungsnummer : **0 528 923 B1**

(12) **EUROPÄISCHE PATENTSCHRIFT**

(45) Veröffentlichungstag der Patentschrift :
**03.08.94 Patentblatt 94/31**

(21) Anmeldenummer : **91909552.1**

(22) Anmeldetag : **14.05.91**

(86) Internationale Anmeldenummer :
**PCT/EP91/00901**

(87) Internationale Veröffentlichungsnummer :
**WO 91/17913 28.11.91 Gazette 91/27**

(51) Int. Cl.⁵ : **B62M 19/00**

(54) **FAHRRAD MIT HYDRAULISCHER ANTRIEBSEINRICHTUNG.**

(30) Priorität : **18.05.90 DE 4015962**

(43) Veröffentlichungstag der Anmeldung :
**03.03.93 Patentblatt 93/09**

(45) Bekanntmachung des Hinweises auf die
Patenterteilung :
**03.08.94 Patentblatt 94/31**

(84) Benannte Vertragsstaaten :
**AT BE CH DE DK FR GB IT LI LU NL**

(56) Entgegenhaltungen :
**FR-A- 2 563 799**
**GB-A- 2 102 747**
**US-A- 4 684 143**

(73) Patentinhaber : **Schulze, Eckehart**
**Stahlbühlstrasse 36**
**D-71287 Weissach (DE)**

(72) Erfinder : **Schulze, Eckehart**
**Stahlbühlstrasse 36**
**D-71287 Weissach (DE)**

(74) Vertreter : **Lutz, Johannes Dieter, Dr. et al**
**Patentanwälte Wolf & Lutz**
**Hauptmannsreute 93**
**D-70193 Stuttgart (DE)**

## Beschreibung

Die Erfindung betrifft ein Fahrrad mit hydraulischer Antriebseinrichtung gemäß dem Oberbegriff des Patentanspruchs 1.

Ein derartiges Fahrrad ist durch das italienische Patent Nr. 1 197 519 bekannt.

Bei dem bekannten Fahrrad ist eine mittels eines in üblicher Anordnung vorgesehenen Pedalantriebes antreibbare, speziell als Radialkolbenpumpe ausgebildete Hydraulikpumpe vorgesehen, welche Druckmittel zu einem in das Hinterrad des Fahrrades integrierten rotatorischen Antriebs-Hydromotor fördert, der einen einem Drehmomentwandler, wie von der Technik der automatischen Kraftfahrzeug-Getriebe her bekannt, ähnlichen Aufbau hat und insoweit auch die Funktion eines solchen Getriebes mit gleichsam stufenloser Veränderbarkeit des Übersetzungsverhältnisses vermitteln soll. Dem diesbezüglich im Anfahrbetrieb sowie bei steiler Bergauf-Fahrt erzielbaren Vorteil einer gleichsam automatischen Zurückschaltung auf eine "niedrige" Schaltstufe steht jedoch der gravierende Nachteil eines sehr schlechten Gesamtwirkungsgrades gegenüber, da, wegen der Abkehr von einer streng volumetrischen Führung des Antriebsmotors, derart, daß einer bestimmten Fördermenge der Pumpe auch eine damit korrelierte Anzahl von Umdrehungen des Antriebs-Hydromotors entspräche, die "physiologische" Antriebsleistung, die der Fahrer dann aufbringen muß, wenn er möglichst schnell beschleunigen möchte und/oder, wenn er eine steile Steigung zu überwinden hat, wesentlich größer wird als die physikalisch übertragbare Antriebsleistung, da - wegen der Wandler-Eigenschaften des Antriebs-Hydromotors zwischen Pumpe und Motor ständig ein erheblicher Schlupf vorhanden ist, der um so größer wird, je größer die dem Antriebsmoment entgegengesetzt gerichteten Verzögerungsmomente sind, die auf das Fahrrad, z.B. bei Bergauf-Fahrt wirken, wobei es im Extremfall sogar möglich ist, daß das Fahrrad gleichsam stehen bleibt, obwohl der Fahrer die Hydraulikpumpe mittels des Pedal-Antriebs mit relativ hoher Drehzahl antreibt.

Weiter bekannte Fahrräder ähnlicher Art mit hydraulischem Antrieb (DE 30 35 630 A1 sowie DE 31 41 676 A1), bei denen eine volumetrische Führung des für das Hinterrad des Fahrrades vorgesehenen Antriebs-Hydromotors gegeben ist, derart, daß dessen Umdrehungen in einer strengen Proportionalität zu der auf eine Umdrehung des Pumpenrotors bezogenen Fördermenge der Pumpe stehen, sind zwar mit den vorgenannten Nachteilen nicht behaftet, dafür aber mit dem mindestens als ebenso gravierenden Nachteil, daß das Umsetzungsverhältnis, mit dem über die Schluckkmenge des Antriebs-Hydromotors dessen Umdrehungszahlen mit den Umdrehungszahlen des Pedalantriebs korreliert sind, nicht veränderbar ist, d.h. die Funktionen eines Schaltgetriebes, das bei reduzierter Drehzahl des Antriebs-Hydromotors des angetriebenen Rades eine entsprechende Erhöhung der Vortriebskräfte ermöglicht, nicht erreichbar sind. Die bekannten Fahrräder mit hydraulischen Antriebseinrichtungen waren daher bislang konventionellen Fahrrädern, die mit rein mechanischen, sogenannten Ketten- oder Nabenschaltungen ausgerüstet sind, sowohl hinsichtlich der erreichbaren Fahrleistungen als auch hinsichtlich des Gesamt-Übertragungs-Wirkungsgrades deutlich unterlegen, was als Grund dafür angesehen werden muß, daß sich hydraulisch angetriebene Fahrräder ungeachtet bedeutsamer, hydraulischen Antrieben inhärenter Vorteile, wie Wartungs- und Verschleißfreiheit, Robustheit und Funktionszuverlässigkeit, auf dem Markt nicht etablieren konnten.

Aus der GB-A-2 102 747 ist auch einen Fahrrad mit hydraulischer Antrieb bekannt. Aufgabe der Erfindung ist es daher, ein Fahrrad mit hydraulischer Antriebseinrichtung der eingangs genannten Art anzugeben, das einem konventionellen Fahrrad mit mechanischem Antrieb, z.B. Ketten-Antrieb und mechanischer Schaltstufen-Wahleinrichtung hinsichtlich der erreichbaren Fahrleistungen und des Übertragungs-Wirkungsgrades - mindestens - äquivalent ist.

Diese Aufgabe wird erfindungsgemäß durch die kennzeichnenden Merkmale des Patentanspruchs 1 gelöst.

Durch die hiernach vorgesehene Ausbildung der pedalgetriebenen Pumpe mit mindestens acht als Kolbenpumpen ausgebildeten Pumpenelementen, von denen eines permanent im Förderbetrieb benutzbar ist, während die anderen sieben einzeln in einer geordneten Reihenfolge in den Förderbetrieb, alternativ dazu in den Umlaufbzw. Kurzschlußbetrieb schaltbar sind, wobei zur diesbezüglichen Funktions-Umschaltung eine mit einfachen Mitteln realisierbare Ventilsteuereinrichtung vorgesehen ist, wird unter Beibehaltung der für einen guten Gesamt-Übertragungs-Wirkungsgrad erforderlichen volumetrischen Führung des Antriebs-Hydromotors gleichwohl eine bedarfsgerechte Schaltstufen-Wahlmöglichkeit mit drastisch verschiedenen Umsetzungsverhältnissen geschaffen, die z.B. zwischen 1/1 und 4/1 als Extremwerte variieren können, wobei der Unterschied zwischen den extremalen Übersetzungsverhältnissen ohne weiteres auch noch größer gewählt werden kann.

Durch eine weiter erhöhte Anzahl von Pumpenelementen, deren Verteilung um die zentrale Achse des Pumpenrotors, d.h. in azimutaler Richtung äquidistant ist, können auch noch erheblich mehr Schaltstufen realisiert werden.

In vorteilhafter Gestaltung der Pumpe und ihrer Schaltstufen-Wähleinrichtung sind diese so ausgebildet,

2

daß das Übersetzungsverhältnis von Schaltstufe zu Schaltstufe etwa um denselben Faktor geändert wird, was durch Wahl verschiedener Durchmesser bzw. effektiver Querschnittsflächen der Kolbenelemente der von Schaltstufe zu Schaltstufe zu- oder abschaltbaren Pumpenelemente ohne weiteres möglich ist.

In der bevorzugten Gestaltung des Fahrrades gemäß Anspruch 3 ist dieses mit einem zu dem permanent wirksamen hydraulischen Hinterrad-Antrieb zuschaltbaren hydraulischen Vorderrad-Antriebsmotor versehen. Dadurch wird die Zahl der möglichen Schaltstufen gleichsam verdoppelt, analog zu einem konventionellen Fahrrad, das mit zwei pedalgetriebenen Kettenrädern und mehreren Antriebsritzeln an der Hinterachse versehen ist. Dieser zuschaltbare Vorderradantrieb, der bei einem konventionellen Fahrrad mit Kettenantrieb praktisch nicht, zumindet nicht auf einfache Weise verwirklichbar wäre, hat den großen Vorteil, daß z.B. auf schlüpfrigem Untergrund und ansteigender Fahrbahn deutlich mehr Vortriebskraft zwischen der Fahrbahn und den angetriebenen Rädern des Fahrrades übertragen werden kann, mithin das Fahrrad mit hydraulischem Allrad-Antrieb eine wesentlich bessere Steigfähigkeit und Geländegängigkeit allgemein besitzt. Dieser Vorteil ist insbesondere für Fahrräder von großer Bedeutung, die geländegängig sein sollen, wie die sog. Mountain-Bikes oder Rennräder, die bei Querfeldein-Rennen eingesetzt werden sollen.

Dabei ist es günstig, wenn, entsprechend der Achslastverteilung bei einem Fahrrad, die Schluckmenge des Vorderrad-Antriebs-Hydromotors nur etwa 40 bis 60 % der Schluckmenge des Hinterrad-Antriebsmotors beträgt, wie gemäß Anspruch 4 vorgesehen.

Durch die Merkmale des Anspruchs 5 ist dem Konstruktionsprinzip nach eine einfache Gestaltung der pedalgetriebenen Pumpe als Axialkolbenpumpe und der Schaltstufen-Wähleinrichtung angegeben, deren spezielle Gestaltung insbesondere hinsichtlich der Schaltstufen-Wähleinrichtung durch die Merkmale des Anspruchs 6 in konstruktiven Einzelheiten näher spezifiziert ist.

Durch die Merkmale des Anpsruchs 7 ist eine vorteilhafte Dimensionierung des Hinterrad-Antriebs-Hydromotors in Relation zu der auf eine Umdrehung des Pumpenrotors bezogenen Fördermenge der Hydraulikpumpe angegeben.

Die durch die Merkmale des Anspruchs 8 angegebene Gestaltung der Antriebs-Hydromotore für das Hinterrad und das Vorderrad des Fahrrades mit feststehendem Gehäuseteil und drehbar angetriebener Nabe, die Teil des Rotors des jeweiligen Hydromotors ist, ermöglicht, in Kombination mit der angegebenen Gestaltung des Vorder- und des Hinterrades gleiche Ausbildungen derselben und damit auf einfache Weise auch deren Austauschbarkeit untereinander oder auch durch ein Ersatzrad, wobei der Austausch, da die Räder des Fahrrades gleichsam einseitig aufgehängt sind, besonders einfach ist.

Ein in der weiteren bevorzugten Gestaltung des erfindungsgemäßen Fahrrades gemäß Anspruch 9 vorgesehener Druckspeicher kann mit besonderem Vorteil als zusätzliche Antriebs-Energiequelle beim Anfahren oder bei einer kurzen Bergauf-Fahrt und/oder beim Überholen eines anderen Fahrzeuges ausgenutzt werden.

Durch die Merkmale des Anspruchs 10 ist eine einfache hydraulische Ventil-Schaltungsanordnung angegeben, mittels derer der Ladebetrieb des Druckspeichers, einerseits, und andererseits die Ausnutzung der im Speicher gespeicherten hydraulischen Hilfsenergie zur Vortriebs-Unterstützung dosierbar ist.

Ein diesbezüglich vorgesehenes Drosselventil hat dann bevorzugt, wie gemäß Anspruch 11 vorgesehen, ein als Lenker-Drehgriff ausgebildetes Betätigungselement, das ähnlich wie bei einem Motorrad die Dosierung der - hier zusätzlichen - Vortriebsleistung ermöglicht.

Die gemäß Anspruch 12 vorgesehene Absperrbarkeit des Speichers gegen die pedalgetriebene Hydraulikpumpe ist insbesondere beim Anfahren zweckmäßig, falls der Druckspeicher noch nicht aufgeladen sein sollte. Durch Absperrung des Druckspeichers gegen die Hydraulikpumpe bleibt dann deren Förderleistung für den Anfahrbetrieb voll ausnutzbar.

Gleichwohl sollte, wie gemäß Anspruch 12 vorgesehen, die Grundstellung eines die Absperrbarkeit des Druckspeichers gegen die Hydraulikpumpe vermittelnden Absperrventils dessen Durchflußstellung sein, damit im normalen Fahrbetrieb gewährleistet ist, daß der Druckspeicher mindestens von Zeit zu Zeit aufgeladen wird bzw. allein durch Absperrung des Verbrauchers - in der Regel des Antriebs-Hydromotors des Hinterrades - aufgeladen werden kann.

Besonders vorteilhaft ist es auch, wenn, wie gemäß Anspruch 14 vorgesehen, der Druckspeicher durch Umschalten des Hinterachs-Antriebsmotors des Fahrrades in den Brems- bzw. Pumpbetrieb aufladbar ist, so daß beispielsweise bei einer Bergab-Fahrt die kinetische Energie des Fahrrades und seines Fahrers zum Aufladen des Druckspeichers ausnutzbar ist.

Ein diesbezüglich erforderliches Lade-Steuerventil, das gemäß Anspruch 15 als ein von Hand aus der dem normalen Fahrbetrieb zugeordneten Grundstellung die in dem Ladebetrieb zugeordnete Funktionsstellung umschaltbar ist, ist gemäß Anspruch 16 mit Vorteil hinsichtlich der Zurückschaltung in den normalen Fahrbetrieb als druckgesteuertes Ventil ausgebildet, das in seine für den normalen Fahrbetrieb vorgesehene Grundstellung zurückgeschaltet wird, sobald der Druck im Druckspeicher einen bestimmten Schwellenwert überschritten hat.

EP 0 528 923 B1

Vorteilhafterweise ist gemäß Anspruch 17 ein den Druck im Druckspeicher anzeigendes Manometer vorgesehen, an dessen Anzeige der Fahrer erkennen kann, wann der Druckspeicher ladebedürftig ist.

Weitere Einzelheiten und Merkmale der Erfindung ergeben sich aus der nachfolgenden Beschreibung spezieller Ausführungsbeispiele eines erfindungsgemäßen Fahrrades anhand der Zeichnung. Es zeigen.

Fig. 1 eine schematisch vereinfachte Seitenansicht eines erfindungsgemäßen Fahrrades mit hydraulischer Antriebseinrichtung,

Fig. 2 ein Hydraulik-Schema zur Erläuterung des Hinterrad-Antriebes des Fahrrades gemäß Fig. 1,

Fig. 3 ein Hydraulik-Schema zur Erläuterung des Vorderachs-Antriebs des Fahrrades gemäß Figur 1,

Fig. 4 den Hinterrad-Antriebsmotor des Fahrrades gemäß Fig. 1 in einer die Drehachse seines Rotors enthaltenden Längsschnitt-Darstellung,

Fig. 5 eine Abwicklungsdarstellung des Motors gemäß Fig. 4,

Fig. 6 eine die Drehachse des Pumpen-Rotors und des Pedal-Antriebs enthaltende Schnittdarstellung der Hydraulikpumpe des Fahrrades gemäß Fig. 1,

Fig. 7 eine Abwicklungsdarstellung der Pumpe gemäß Fig. 6,

Fig. 8 Einzelheiten des wechselseitigen Eingriffs von Ventilkörpern einer Schaltstufen-Wähleinrichtung der Pumpe gemäß den Figuren 6 und 7 und

Fig. 9 eine vereinfachte Vorderansicht des Fahrrades gemäß Fig. 1 zur Erläuterung der Radaufhängungen.

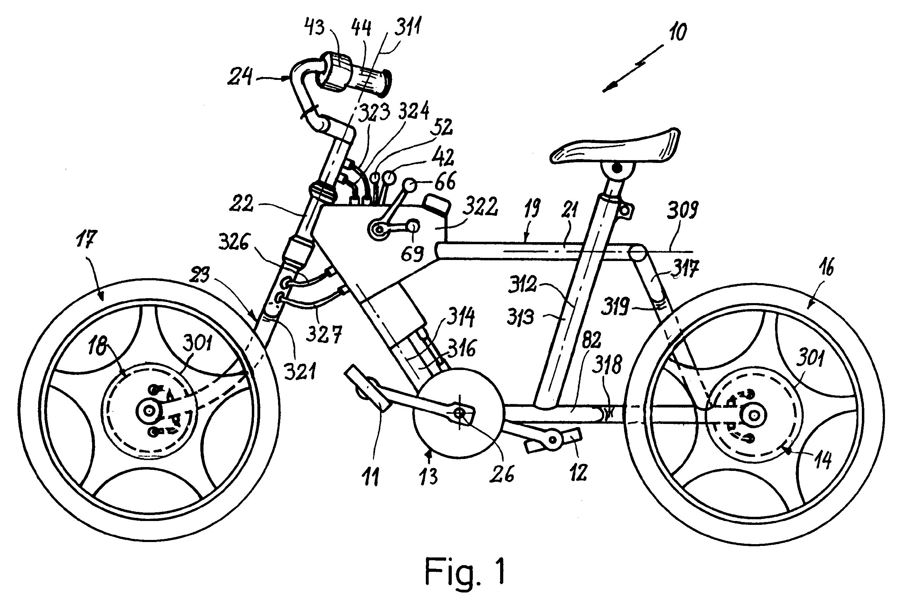

Das in der Fig. 1, auf deren Einzelheiten zunächst verwiesen sei, dargestellte, erfindungsgemäße, insgesamt mit 10 bezeichnete Fahrrad unterscheidet sich von einem konventionellen Fahrrad mit mittels eines Tretkurbel-Antriebes angetriebenem Antriebszahnrad, einem Antriebsritzel und Freilauf am Hinterrad sowie einer zur Kraftübertragung vom Antriebszahnrad auf das Antriebsritzel vorgesehenen Kette im wesentlichen dadurch, daß es einen hydraulischen Antrieb hat, der eine mittels der in üblicher Anordnung vorgesehenen Pedale 11 und 12 rotatorisch antreibbare, insgesamt mit 13 bezeichnete Hydraulikpumpe und mindestens einen, insgesamt mit 14 bezeichneten Rotations-Hydromotor umfaßt, der das Hinterrad 16 des Fahrrades 10 antreibt.

Beim dargestellten, speziellen Ausführungsbeispiel ist auch für das Vorderrad 17 ein funktionell und baulich dem Hinterrad-Antriebsmotor 14 entsprechender Rotations-Hydromotor 18 vorgesehen, der bei Bedarf eingeschaltet werden kann, so daß das Fahrrad 10 insgesamt mit einem permanenten Hinterrad-Antrieb und einem zuschaltbaren Vorderrad-Antrieb ausgerüstet ist.

Hinsichtlich der statisch-konstruktiven Gestaltung des ingesamt mit 19 bezeichneten Rahmens des Fahrrades 10, der demjenigen eines Herren"-Fahrrades mit horizontalem Oberrohr 21 entspricht, sowie der Realisierung der Lenkung mittels einer an dem geneigt verlaufenden Steuerrohr 22 des Rahmens 19 drehbar gelagerten Vorderrad-Gabel, die mittels des Lenkers 24 drehbar ist, sowie auch hinsichtlich der Anordnung der gemeinsamen Drehachse 26 der Pedale 11 und 12 ist das erfindungsgemäße Fahrrad weitestgehend einem konventionellen Fahrrad analog und es ist daher, abgesehen von signifikanten Verbesserungen hinsichtlich der Antriebstechnik, wie ein konventionelles Fahrrad benutzbar.

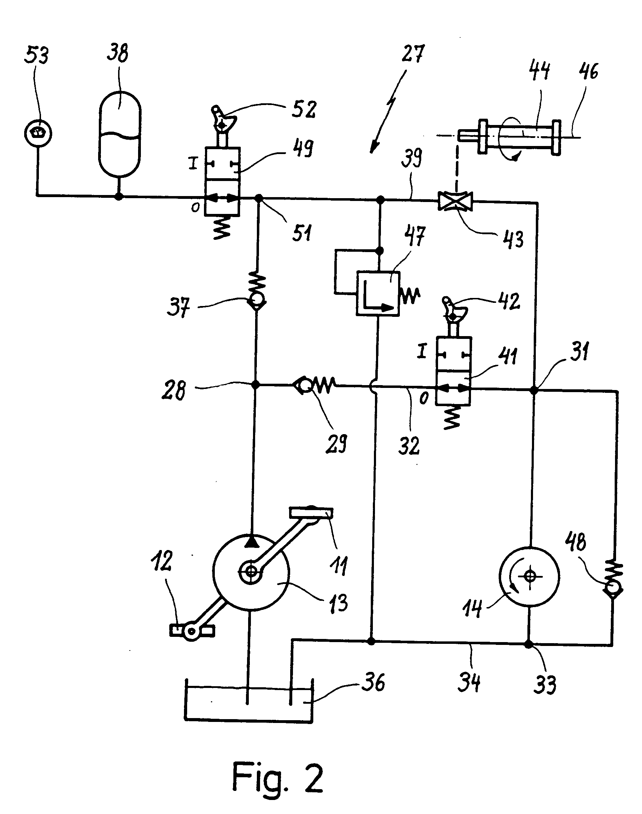

Zu einer mehr detaillierten Erläuterung des Hydraulikantriebs des erfindungsgemäßen Fahrrades 10 sei nunmehr zunächst auf das diesen Antrieb repräsentierende, insgesamt mit 27 bezeichnete Hydraulikschema der Fig. 2 verwiesen, das einer einfachen Ausführungsform des erfindungsgemäßen Fahrrades 10 entspricht, bei dem nur das Hinterrad 16 hydraulisch angetrieben ist.

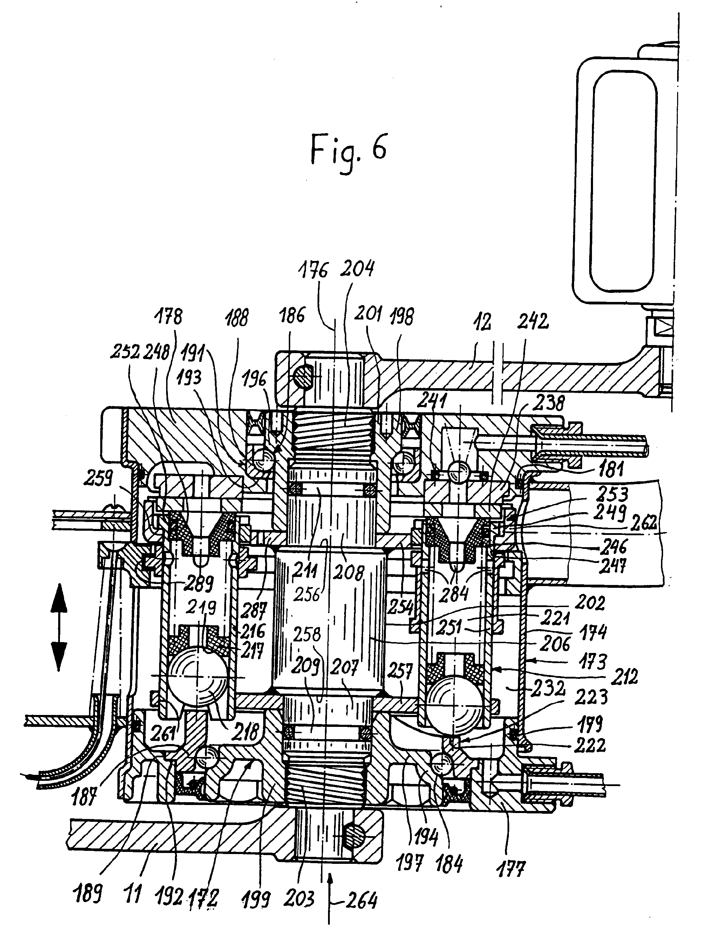

Für die Hydraulikpumpe 13 und den Hydromotor 14 seien die anhand der Figuren 6 und 7 bzw. 4 und 5 noch näher zu erläuternden Gestaltungen als Axialkolben-Pumpe bzw. Axialkolben-Motor vorausgesetzt, was selbstverständlich nicht zwingend ist. Vielmehr können auch andere Typen rotatorisch antreibbarer Pumpen und rotatorisch antreibender Hydromotoren eingesetzt werden, die mit hinreichend geringem Raumbedarf realisierbar sind.

Der Druckausgang 28 der Hydraulikpumpe 13 ist über ein erstes Ausgangs-Rückschlagventil 29 an eine zum Druckversorgungs-Eingang 31 des Hydromotors 14 führende Druck-Versorgungsleitung 32 angeschlossen, dessen Druckmittel-Auslaß 33 über eine Rücklaufleitung 34 mit dem Druckmittel-Vorratsbehälter 36 verbunden ist, an den auch die Saugseite der Hydraulikpumpe 13 angeschlossen ist.

Der Druckausgang 28 der Hydraulikpumpe 13 ist über ein zweites Ausgangs-Rückschlagventil 37 an einen Druckspeicher 38 angeschlossen, von dem eine zweite Druckversorgungsleitung 39 ebenfalls zum Druck-Versorgungseingang 31 des Hydromotors 14 führt.

Die über das erste Ausgangs-Rückschlagventil 29 an den Druckausgang 28 der Hydraulikpumpe 13 angeschlossene erste Druckversorgungsleitung 32 ist mittels eines von Hand betätigbaren 2/2-Wege-Ventils 41 absperrbar, wobei die Grundstellung 0 dieses Ventils 41 seine Druchflußstellung ist, in welcher der Druckausgang 28 der Hydraulikpumpe 13 über deren erstes Ausgangs-Rückschlagventil 29 mit dem Druckversorgungs-Eingang des Hydromotors 14 verbunden ist. Es ist durch Betätigung eines Exzenters 42 in seine Sperrstellung I umschaltbar, in welcher somit der Druck-Versorgungseingang 31 des Hydromotors

4

14 gegen den Druckausgang 28 der Hydraulikpumpe 13 abgesperrt ist.

Zwischen den Druckspeicher 38 und den Druck-Versorgungseingang 31 ist in die zweite Druckversorgungsleitung 39 ein Drosselventil 43 mit einstellbar-variablem Strömungsquerschnitt eingefügt, der durch Drehen eines am Lenker 24 des Fahrrades 10 vorgesehenen Handgriffes 44 einstellbar ist, wobei der Verstellbereich des Drosselquerschnittes des Drosselventils 43 von Absperrung der zweiten Druckversorgungsleitung 39 bis zur vollständigen Freigabe ihres vollen Strömungsquerschnittes reicht. Der Handgriff 44 wird durch eine - nicht dargestellte -Rückstellfeder in diejenige Position gedrängt, in welcher das Drosselventil 43 die Absperrung der zweiten Druckversorgungsleitung 39 vermittelt.

Durch Verdrehen des Handgriffes 44 um etwa 180° um seine Drehachse 46 gelangt das Drosselventil 43 in seine maximalem Strömungsquerschnitt entsprechende Funktionsstellung.

Die den Ventilkörper des ersten Ausgangs-Rückschlagventils 29 der Hydraulikpumpe 13 in dessen Sperrstellung drängende Ventilfeder ist in typischer Gestaltung dahingehend ausgelegt, daß der Öffnungsdruck dieses ersten Ausgangs-Rückschlagventils 29 zwischen 0,5 und 1 bar beträgt.

Die den Ventilkörper des zweiten Ausgangs-Rückschlagventils 37 in dessen Sperrstellung drängende Ventilfeder ist in typischer Gestaltung des - zwischen den Druckausgang 28 der Hydraulikpumpe 13 und den Druckspeicher 38 geschalteten - Ausgangs-Rückschlagventils 37 so dimensioniert, daß dessen Offnungsdruck mindestens zwanzig und vorzugsweise zwischen vierzig und sechzig bar beträgt.

Zwischen den Druckspeicher 38 und den drucklosen bzw. auf Umgebungsdruck befindlichen Druckmittel-Vorratsbehälter 36 ist ein Druckbegrenzungsventil 47 geschaltet, das den Ausgangsdruck des Druckspeichers 38 auf ein Maximal-Niveau von ca. 200 bis 250 bar begrenzt.

Zu dem Hydromotor 14 ist - zwischen dessen Druckversorgungseingang 31 und dessen Druckmittel-Auslaß 33 ein Freilauf-Rückschlagventil 48 parallel geschaltet, das durch relativ höheren Druck in der Rücklaufleitung 34 bzw. dem Vorratsbehälter 36 als in der ersten Druck-Versorgungsleitung 32 bzw. am Druckversorgungseingang 31 in Öffnungsrichtung beaufschlagt ist, wobei der diesbezügliche Offnungsdruck des Freilauf-Rückschlagventils 48 niedriq ist und etwa demjenigen des ersten Ausgangs-Rückschlagventils 29 der Hydraulikpumpe 13 entspricht.

Der Druckspeicher 38 ist mittels eines weiteren von Hand umschaltbaren 2/2-Wege-Ventils 49, dessen Grundstellung O seine den Druckspeicher 38 mit der Anschlußstelle 51, an welcher das zweite Ausgangs-Rückschlagventil 37 der Hydraulikpumpe 13 an die zweite Druckversorgungsleitung 39 angeschlossen ist, verbindende Durchfluß-Stellung ist, gegen die Hydraulikpumpe 13 und gegen die zweite Druckversorgungsleitung 39 absperrbar, wobei zur Betätigung dieses weiteren 2/2-Wege-Ventils wiederum ein Exzenter 52 vorgesehen ist.

Das Fahrrad 10 mit dem insoweit erläuterten, dem Hydraulikschema 27 der Fig. 2 entsprechenden hydraulischen Antrieb ist wie folgt benutzbar:

Zum Starten wird das zwischen den Druckspeicher 38 und die Anschlußstelle 41 geschaltete 2/2-Wege-Ventil 49 durch Betätigung des Exzenters 52 in seine Sperrstellung I umgeschaltet. Durch Antreiben der Hydraulikpumpe mittels der Pedale 11 und 12 wird Druckmittel von der Hydraulikpumpe 13 über deren Ausgangs-Rückschlagventil und das in seiner Durchfluß-Stellung O befindliche 2/2-Wege-Ventil 41 zum Hydromotor 14 gefördert, wodurch das Hinterrad 16 des Fahrrades 10 angetrieben wird. Das Drosselventil 43 wird während des Anfahrens, falls der Druckspeicher 38 nicht aufgeladen ist, zweckmäßigerweise ebenfalls in seiner die zweite Druckversorgungsleitung 39 sperrenden Grundstellung gehalten, was jedoch nicht zwingend erforderlich ist. In diesen Funktionsstellungen der beiden Ventile 41 und 49 wird das von der Hydraulikpumpe 13 geförderte Druckmittel quantitativ dem Hydromotor 14 zugeleitet, was insoweit optimale Anfahr-Beschleunigung ermöglicht.

Der Druckspeicher 38 ist als Hochdruck-Speicher ausgebildet, der auf Drücke bis zu 250 bar aufladbar ist, wobei die Speicherkapazität etwa dem Zehn- bis Zwanzigfachen des auf eine Umdrehung des Hydromotors 14 bezogenen Schluckvolumen $V_s$ des Hydromotors 14 entspricht, d.h. einer Druckmittelmenge, die für eine Fahrstrecke von ca. 20 bis 40 m ausreicht, ohne daß hierbei der Fahrer in die Pedale treten muß.

Zur Aufladung des Druckspeichers 38, die zweckmäßigerweise auf einer leicht abschüssigen Gefällstrecke erfolgt, auf der das Fahrrad rollt, ohne daß der Fahrer Antriebsleistung zu erbringen hat, wird das dem Druckversorgungseingang 31 des Hydromotors 14 vorgeschaltete 2/2-Wege-Ventil 41 in seine Sperrstellung I geschaltet, während das dem Speicher 38 vorgeschaltete 2/2-Wege-Ventil 49, falls dies nicht ohnehin schon der Fall ist, in seine Grundstellung O - seine Durchflußstellung - umgeschaltet wird; das Drosselventil 43 bleibt in seiner die zweite Druckversorgungsleitung 39 sperrenden Stellung gehalten. In diesen Funktionsstellungen der genannten Ventile 41, 49 und 43 wird, wenn nunmehr der Fahrer die Hydraulikpumpe 13 antreibt, Druckmittel aus dem Vorratsbehälter 36 in den Druckspeicher 38 zu dessen Aufladung gefördert. Zur Überwachung des Speicherdruckes ist ein Manometer 53 vorgesehen, das dem Fahrer eine Ladebedürftigkeit des Speichers 38 anzeigt. Nach einem Abschluß des Ladevorganges wird das dem Speicher 38 vorgeschaltete 2/2-Wege-Ventil 49 zweckmäßigeweise wieder in seine Sperrstellung I umgeschaltet, und es wird das dem Hydromotor 14 vorgeschaltete 2/2-Wege-Ventil 41 wieder in seine Grundstellung O - die Antriebs-Stellung - zurückgeschaltet.

Soll z.B. beim Anfahren an einer Straßenkreuzung oder bei einer Bergauf-Fahrt die im Druckspeicher 38 gespeicherte Energie zur Vortriebs-Erzeugung mit ausgenutzt werden, so wird das dem Druckspeicher 38 vorgeschaltete 2/2-Wege-Ventil 49 in dessen Durchfluß-Stellung O geschaltet, und es kann dann durch manuelle Betätigung des Drosselventils 43 der Beitrag dosiert werden, mit dem die gespeicherte Energie zum Antrieb des Fahrrades 10 ausgenutzt werden soll.

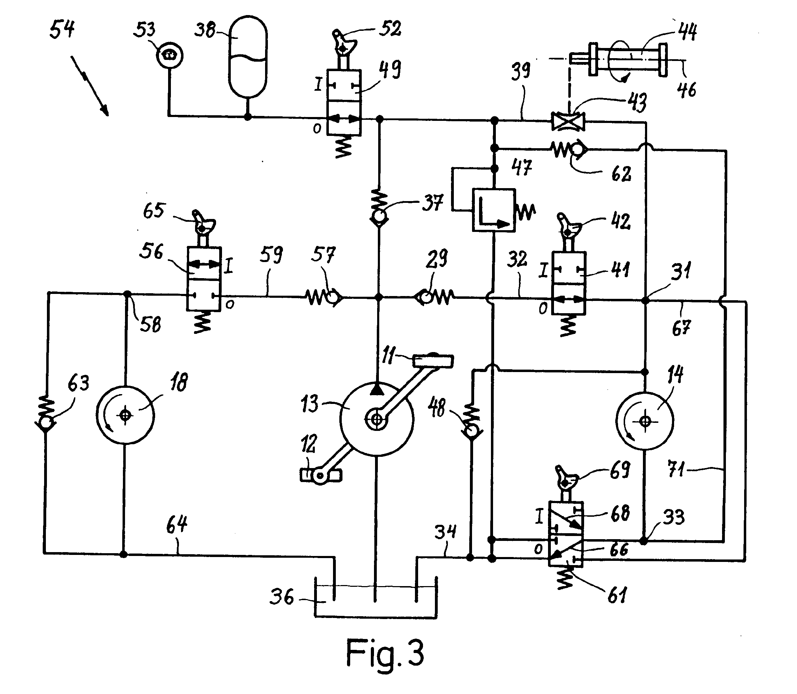

Zur Erläuterung einer bevorzugten Gestaltung des Fahrrades 10 sei nunmehr auf die diesbezüglichen Einzelheiten der Fig. 3 verwiesen, in der durch das ingesamt mit 54 bezeichnete Hydraulikschema der für das Fahrrad 10 gemäß Fig. 1 vorgesehene, hydraulische Allrad"-Antrieb repräsentiert ist.

Der Hydraulikantrieb 54 gemäß Fig. 3 unterscheidet sich von demjenigen gemäß Fig. 2 lediglich durch additiv hinzugekommene Komponenten und deren Anschlußleitungen, nämlich den für den Antrieb des Vorderrades 17 vorgesehenen Rotations-Hydromotor 18, ein Zuschalt-Ventil 56, ein weiteres Ausgangs-Rückschlagventil 57 der Hydraulikpumpe 13, über das deren Druckausgang 28 an die zum Druck-Versorgungseingang 58 des dem Vorderrad zugeordneten Hydromotors 18 führende, mittels des Zuschalt-Ventils 56 bedarfsgerecht absperrbare oder freigebbare Druckversorgungsleitung 59 angeschlossen ist, sowie ein dem Hydromotor 14 für das Hinterrad 16 des Fahrrades 10 zugeordnetes Lade-Steuerventil 61, mittels dessen der dem Hinterrad 16 des Fahrrades 10 als Antriebsmotor zugeordnete Hydromotor 14 auf Pumpbetrieb zur Aufladung des Speichers 38 umschaltbar ist, sowie ein für diesen Betriebszustand des Hydromotors 14 erforderliches Ausgangs-Rückschlagventil 62 und die für diese zusätzlichen Elemente erforderlichen Anschlußleitungen. Auch für den Vorderrad-Antriebs-Hydromotor 18 ist ein Freilauf-Rückschlagventil 63 vorgesehen, das zwischen den Druckversorgungseingang 58 und die Rücklaufleitung 64 des Hydromotors 18 - zu diesem parallel - geschaltet ist.

Das Zuschaltventil 56 ist als ein wiederum mittels eines Exzenters 65 von Hand betätigbares 2/2-Wege-Ventil ausgebildet, dessen Grundstellung O die Sperrstellung ist, in welcher der Antriebs-Hydromotor 18 des Vorderrades 17 gegen den Druckausgang 28 der Hydraulikpumpe 13 abgesperrt ist. Der Vorderradantrieb 18 wird durch Umschalten des Zuschaltventils 56 in dessen Durchflußstellung I aktiviert.

Das Lade-Steuerventil 61 ist als 4/2-Wege-Ventil ausgebildet, das - von Hand - aus seiner dargestellten Crundstellung 0, in welcher der Druckmittel-Auslaß 33 des Antriebs-Hydromotors 14 des Hinterrades 16 des Fahrrades 10 über einen Durchflußpfad 66 mit der zum Vorratsbehälter 36 der Hydraulikpumpe 13 führenden Rücklaufleitung 34 verbunden, dieser aber gegen eine zum Druckmittel-Eingang 31 des Hydromotors 14 führende Anschlußleitung 67 abgesperrt ist, in seine zur Grundstellung O alternative Funktionsstellung I umschaltbar ist, in welcher der Druckmittel-Auslaß 33 des Hydromotors 14 gegen die zum Vorratsbehälter 36 führende Rücklaufleitung 34 abgesperrt, dieser aber über einen weiteren Durchfluß-Strömungspfad 68 des Ladesteuerventils 61 mit der zum Druckmittel-Eingang 31 des Hydromotors 14 führenden Anschlußleitung 67 verbunden ist.

Zur Umschalt-Betätigung des Lade-Steuerventils 61 ist wiederum ein lediglich schematisch dargestellter Exzenter 69 vorgesehen.

Die Grundstellung O des Lade-Steuerventils 61 ist dem normalen, d.h. den Antrieb des Hinterrades 16 des Fahrrades 10 vermittelnden Betrieb des Hydromotors 14 zugeordnet, während die Funktionsstellung I des Lade-Steuerventils 61 dem Ladebetrieb des Hydromotors 14 zugeordnet ist, in welchem dieser als vom Hinterrad 16 des Fahrrades 10 angetriebene Hydraulikpumpe arbeitet, welche über die an den Druckausgang 33 des Hydromotors 14 angeschlossene Ladeleitung 71 und das Ausgangs-Rückschlagventil 62 Druckmittel zu der Druckversorgungsleitung 39 und über diese und das in seiner Offen-Stellung O gehaltene 2/2-Wege-Ventil 49 in den Druckspeicher 38 zu dessen Aufladung fördert.

Der mittels des Lade-Steuerventils 61 steuerbare Ladebetrieb ist insbesondere bei Bergabfahrten zu einer mühelosen Aufladung des Druckspeichers 38 ausnutzbar.

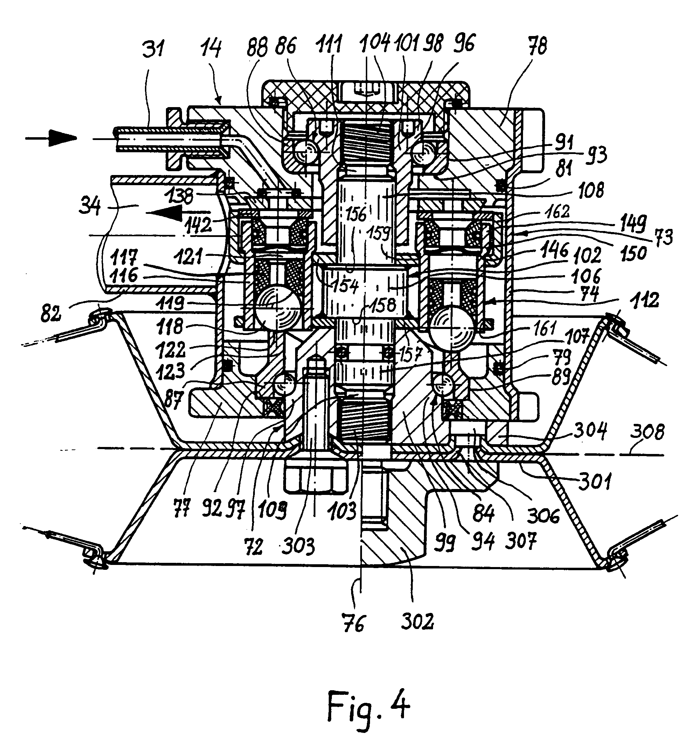

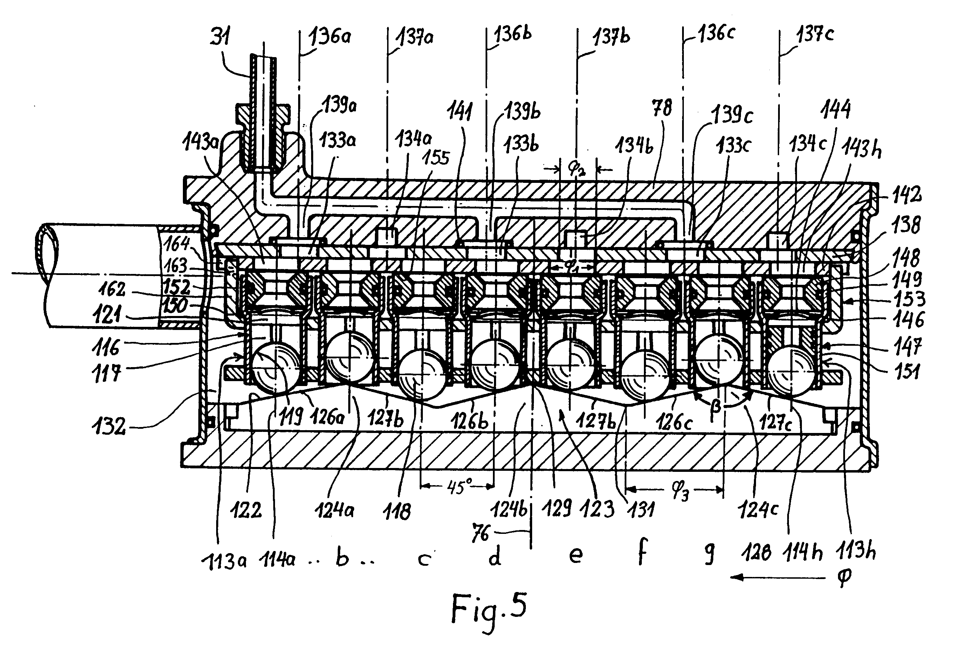

Zur Erläuterung einer bevorzugten Gestaltung der für den Antrieb des Hinterrades 16 und des Vorderrades 17 vorgesehenen Hydro-Motore 14 und 18 sei nunmehr auf die diesbezüglichen Einzelheiten der Figuren 4 und 5 verwiesen, wobei, der Einfachheit halber, lediglich der für das Hinterrad 16 vorgesehene Hydro-Motor 14 im einzelnen beschrieben wird.

Gemäß der Darstellung der Fig. 4, der auch Einzelheiten der Konstruktion des Rahmens 19 sowie der Gestaltung der Räder 16 bzw. 17 des Fahrrades 10 und deren Befestigung am insgesamt mit 72 bezeichneten Rotor des jeweiligen Hydro-Motors 14 bzw. 18 entnehmbar sind, besteht das insgesamt mit 73 bezeichnete Gehäuse des Hydro-Motors 14 aus einem relativ dünnwandigen, zylindrisch-rohrförmigen Mantelteil 74, dessen axiale, d.h. in Richtung seiner zentralen, mit der Drehachse 76 des Rotors 72 bzw. des Hinterrades 16 gemessene Ausdehnung etwa gleich dem Innendurchmesser dieses Mantels 74 selbst ist.

Das Gehäuse 73 ist an seiner linken und an seiner rechten Stirnseite durch je ein Ringflansch-förmiges Stirnwandteil 77 bzw. 78 abgeschlossen, die drehfest in das Mantelteil 74 eingesetzt und mittels je einer Ringdichtung 79 bzw. 81 gegen die innere Mantelfläche des Mantelteils 74 abgedichtet sind.

Das Mantelteil 74 ist an das untere - im wesentlichen horizontal verlaufende - Rahmenrohr 82 des Fahrradrahmens 19 angeschweißt, das das Gehäuse 73 des Hydro-Motors 14 mit dem insgesamt mit 83 bezeichneten Gehäuse der Hydraulikpumpe 13 des Fahrrades 10 verbindet, die, in weitestgehender Analogie zu der Gestaltung des Antriebs-Hydro-Motors 14 als Axialkolben-Hydromotor ihrerseits als Axialkolben-Hydraulikpumpe ausgebildet ist, auf deren konstruktive und funktionelle Einzelheiten nachfolgend noch näher eingegangen werden wird.

Der Rotor 72 des Axialkolbenmotors 14 ist, um dessen zentrale Längsachse 76 drehbar, mittels eines ersten Schrägkugellagers 84 an dem radseitigen Stirnwandteil 77 des Motorgehäuses 73 und mittels eines zweiten Schrägkugellagers 86 an dem anderen, in Längsrichtung des Fahrrades 10 gesehen, rechten Stirnwandteil 78 des Motorgehäuses 73 gelagert.

Die radial äußeren, in axialer Richtung gesehen inneren, d.h. in einem geringeren Abstand voneinander angeordneten, gehäusefesten Lagerschalen 87 und 88 der beiden Schrägkugellager 84 und 86 sind durch in zentrale, durchgehende Öffnungen 89 bzw. 91 des linken Stirnwandteils 77 bzw. des rechten Stirnwandteils 78 fest eingesetzte Stahlteile gebildet, die an radialen Stufen 92 bzw. 93 dieser Öffnungen 91 bzw. 92 zusätzlich axial abgestützt sind.

Die radial inneren, sich mit dem Rotor 72 drehenden Lagerschalen 94 und 96 des linken Schrägkugellagers 84 bzw. des rechten Schrägkugellagers 86 sind durch in der Schnittdarstellung der Fig. 4 viertelkreis-sektorförmig gewölbte Innenflächen radialer Flansche 97 bzw. 98 von Gewindehülsen 99 bzw. 101 gebildet, die, jeweils von außen her, auf ein zentrales, das Gehäuse 73 und die zentralen Öffnungen 89 und 91 seiner Stirnwandteile 77 und 78 axial durchsetzendes, zentrales, insgesamt mit 102 bezeichnetes Wellenteil aufschraubbar sind, wobei die diesbezüglich an den freien Endabschnitten des Wellenteils 102 vorgesehenen Außengewinde 103 und 104 und die mit diesen kämmenden Innengewinde der Gewindehülsen 99 und 101 an der linken Seite des Axialkolbenmotors 14 bzw. des Fahrrades 10 als Rechtsgewinde und an der rechten Seite des Axialkolbenmotors 14 als Linksgewinde ausgebildet sind. Durch diese Gestaltung der genannten Gewinde wird vermieden, daß sich die Gewindehülsen 99 und 101 im Fahrbetrieb des Fahrrades 10 lockern können.

Die beiden Schrägkugellager 84 und 86 sind durch Anziehen der rechten Gewindehülse 101 gegeneinander verspannbar, wobei schon ein mäßiges Anzugs-Drehmoment ausreicht, um Spielfreiheit der Lagerung insgesamt zu erzielen. Das - einstückig ausgeführte - zentrale Wellenteil 102 hat ein flanschförmiges Mittelstück 106, von dem - beidseits - zylindrisch-stabförmige Wellenstücke 107 und 108 etwas geringeren Durchmessers ausgehen, welche gegen die mit den Außengewinden 103 und 104 versehenen Endabschnitte, deren Durchmesser wiederum etwas geringer ist, durch je eine flache Ringnut 109 bzw. 111 abgesetzt sind.

Das insgesamt mit 112 bezeichnete Antriebsteil des Rotors 72 des Axialkolbenmotors 14, das drehfest mit dessen zentralem Wellenteil 102 verbunden ist, umfaßt eine Mehrzahl - beim dargestellten, speziellen Ausführungsbeispiel insgesamt acht - von "kleinen" linearen Hydro-Zylindern 113a bis 113h, die mit zur zentralen Längsachse 76 des Axialkolbenmotors 14 parallelem Verlauf ihrer zentralen Längsachsen 114a bis 114h in 8-zählig - axialsymmetrischer Gruppierung um die zentrale Längsachse 76 des Axialkolbenmotors 14, d.h. in azimutalen Winkelabständen von jeweils 45° und in gleichen radialen Abständen von der zentralen Längsachse 76, angeordnet sind (Fig. 5).

Die alphabetische Indizierung "a bis h" der für die Linearzylinder oder deren zentrale Achsen benutzten Bezugszeichen 113 und 114 ist, der Einfachheit halber, nur in der Abwicklungsdarstellung der Fig. 5 angegeben, auf die nunmehr ebenfalls verwiesen sei, da nur in dieser sämtliche Linearzylinder 113a bis 113h und deren zentrale Achsen 114a bis 114h dargestellt sind.

Diese Linearzylinder 113a bis 113h haben je ein in einem Gehäuseelement 116 druckdicht verschiebbar angeordnetes Kolbenelement 117, das zusammen mit einer Stützkugel 118, die in einer komplementär-kalottenförmigen Lagerpfanne 119 des Kolbenelements 117 frei drehbar gelagert ist, die druckdicht-axial bewegliche Begrenzung eines Antriebs-Druckraumes 121 bildet, durch dessen Druckbeaufschlagung mit dem Ausgangsdruck der - pedalgetriebenen - Hydraulikpumpe 13 der durch das Kolbenelement 117 und die Stützkugel 118 gebildete Kolben des jeweiligen Linearzylinders 113a bis 113h - mit seiner Stützkugel 118 - in Anlage mit der dem Antriebsteil 112 zugewandten Lauffläche 122 einer mit dem radseitigen Stirnwandteil 77 fest verbundenen Kurvenrippe 123 gedrängt wird, die beim dargestellten, speziellen Ausführungsbeispiel, bei dem der Rotor 72 mit acht Linearzylindern 113a bis 113h bestückt ist, die Form einer bezüglich der zentralen Längsachse 76 axial-symmetrisch ausgebildeten "dreizackigen" Krone hat, deren Zacken 124a, 124b und 124c zum Antriebsteil 112 des Rotors 72 des Axialkolbenmotors 14 hinweisend angeordnet sind, wobei der mittlere Durchmesser dieser Kurvenrippe 123 dem Durchmesser des mit der zentralen Längsachse 76 des Axialkolbenmotors 14 konzentrischen Kreises entspricht, entlang dessen die zentralen Achsen 114a bis 114h der Linearzylinder 113a bis 113h des Antriebsteils 112 - im Betrieb des Motors 14 - um dessen zentrale Längsachse 76 rotieren.

In der Abwicklungs-Darstellung der Fig. 5 gesehen, haben die Zacken 124a bis 124c die Form flacher, gleichschenklig-stumpfwinkliger Dreiecke, deren, in Drehrichtung des Rotors 72 gesehen, abfallende Schenkel 126a, 126b und 126c und ansteigende Schenkel 127a bis 127c paarweise einen stumpfen Winkel β einschließen, der in praxi einen Wert um 140°, in bevorzugter Auslegung des Axialkolbenmotors 14, einen Wert von 138° hat.

In der durch den Pfeil 128 der Fig. 5 repräsentierten, azimutalen Richtung ($\varphi$-Richtung) - der Drehrichtung des Rotors 72 - gesehen, sind durch die abfallenden Schenkel 126a bis 126c und die aufsteigenden Schenkel 127a bis 127c der Zacken 124a bis 124c der Kurvenrippe 123 abfallende und ansteigende Rampen konstanter Neigung bzw. Steigung gebildet, die in den Spitzen" 129 der Kronenzacken 124a bis 124c sowie in den zwischen diesen angeordneten "Tälern" 131 innerhalb eines kleinen Winkelbereiches, der jeweils nur wenige Grad umfaßt, mit glatter Krümmung aneinander anschließen, wobei der Krümmungsradius, mit dem je eine absteigende Flanke 126a bis 126c und eine absteigende Flanke 127a bis 127c zweier einander benachbarter Kronenzacken 124a bis 124c der Kurvenrippe 123 in den Tälern 131 aneinander anschließen, etwas größer ist als der Kugelradius der Stützkugeln 118, über welche die Kolben 117, 118 des Antriebsteils 112 des Rotors 72 an der Lauffläche 122 der Kurvenrippe 123 angreifen. Die Lauffläche 122 der Kurvenrippe 123 ist als flachkonkave Rille ausgebildet, deren Krümmungsradius, in der Schnittrichtung der Fig. 4 gesehen, demjenigen der Stützkugeln 118 entspricht.

Die Antriebs-Steuerung des Hydromotors 14 erfolgt durch alternierende Druckbeaufschlagung und -entlastung der Antriebsdruckräume 121 der "kleinen" Linearzylinder 113a bis 113h, deren Anschluß an den Druckversorgungseingang 31 innerhalb des Hydromotors 14 derart getroffen ist, daß die Antriebsdruckräume 121 jeweils derjenigen Linearzylinder, deren Stützkugeln 118 in der jeweiligen Position des Rotors 72 an einer abfallenden Flanke 126a bis 126c der Kurvenrippe 123 axial abgestützt sind, mit dem Ausgangsdruck der Hydraulikpumpe 13 beaufschlagt sind - in der Abwicklungs-Darstellung der Fig. 5 sind dies die Antriebsdruckräume 121 der Linearzylinder 113a, 113d sowie 113f und 113g - und gleichzeitig die Antriebsdruckräume 121 derjenigen Linearzylinder 113a bis 113h des Rotors 72 des Hydro-Motors, deren Stützkugeln 118 momentan an ansteigenden Flanken 127a bis 127c der Kurvenrippe 123 axial abgestützt sind - in der in der Fig. 5 dargestellten Rotor-Position sind dies die Linearzylinder 113b, 113c sowie 113e und 113h - mit der zum Druckmittel-Vorratsbehälter 36 zurückführenden Rücklaufleitung 34 verbunden sind, als welche beim dargestellten, speziellen Ausführungbeispiel das untere Rahmenrohr 82 des Fahrradrahmens 19 ausgenutzt ist, das über eine an dem Mantelteil 74 des Motor-Gehäuses 73 vorgesehene, den Druckmittel-Auslaß 33 des Hydromotors 14 bildende Öffnung mit dem sich zwischen den beiden Stirnwandteilen 77 und 78 erstreckenden Innenraum 132 des Motorgehäuses 73 in kommunizierender Verbindung steht.

Aus den durch die Druckbeaufschlagung der den abfallenden Flanken 126a, b und c der Kurvenrippe 123 jeweils - axial - gegenüberstehend angeordneten Linearzylinder erzeugten Axialkräften resultieren an den jeweiligen Abstützstellen der Stützkugeln 118 dieser Linearzylinder an der Kurvenrippe 123 auf den Rotor 72 des Hydromotors 14 in Umfangsrichtung wirksame Reaktionskraft-Komponenten, durch die Drehmoment-Entfaltung des Hydromotors 14 zustande kommt.

Zur zweckentsprechenden bedarfsgerechten Steuerung des Hydro-Motors 14 sind an dessen der Kurvenrippe 123 gegenüberliegendem, rechtem Stirnwandteil 78 - beim dargestellten, speziellen Ausführungsbeispiel drei - Steuerkanäle 133a, 133b und 133c vorgesehen, die untereinander und mit dem Druckversorgungs-Eingang 31 des Hydro-Motors 14 verbunden sind, sowie drei Entlastungskanäle 134a, 134b und 134c, die, wie am besten der Fig. 4 entnehmbar ist, kommunizierend mit dem Innenraum 132 des Hydromotors 14 verbunden sind. Die zentralen Achsen 136a, 136b und 136c der Druckversorgungs-Steuerkanäle 133a bis 133c und die zentralen Achsen 137a, 137b und 137c der Entlastungskanäle 134a, 134b und 134c verlaufen parallel zur zentralen Längsachse 76 des Hydromotors 14 und durchstoßen einen mit diesem koaxialen Kreis, dessen Radius dem mittleren Durchmesser der Kurvenrippe 123 entspricht.

Die Anordnung der Steuerkanäle 123a bis 123c ist so getroffen, daß ihre zentralen Achsen, gesehen in der Abwicklungsdarstellung der Fig. 5, jeweils durch den zwischen je einer Spitze 129 und einem Tal 131 der Kurvenrippe 123 gelegenen Mittelpunkt der in $\varphi$-Richtung 128 gesehen abfallenden Flanken 126a bis 126c der Kurvenrippe 123 verlaufen. Entsprechend ist die Anordnung der Entlastungskanäle 134a bis 134c so getroffen, daß deren zentrale Achsen 137a bis 137c durch die Mittelpunkte der in $\varphi$-Richtung 128 gesehen ansteigenden Flanken 127a bis 127c der Zacken 124a bis 124c der Kurvenrippe 123 verlaufen.

Die Steuerkanäle 133a, 133b und 133c und die Entlastungskanäle 134a, 134b und 134c sind aus Gründen einer möglichst einfachen und präzisen Fertigung als kreisrunde Bohrungen oder Ausstanzungen an einer kreisringförmigen, ersten Steuerscheibe 138 ausgebildet, welche gehäusefest an die Innenseite des rechten Stirnwandteils 78 des Motorgehäuses 73 angesetzt ist. In die Steuerkanäle 134a bis 134c mündende untereinander und mit dem Druckversorgungs-Eingang 31 des Hydromotors 14 verbundene Versorgungskanäle 139a, 139b und 139c sind mittels je einer Ringdichtung 141 gegen den Innenraum 132 des Hydromotors 14 abgedichtet.

Als weiteres Steuerungselement ist eine zweite, kreisringförmige Steuerscheibe 142 vorgesehen, die mit den kleinen Linearzylindern 113a bis 113h einzeln zugeordneten Steueröffnungen 143a bis 143h versehen ist, die koaxial mit den zentralen Längsachsen 114a bis 114h der Linearzylindeer 113a bis 113h des Antriebsteils 112 angeordnet sind. Diese zweite Steuerscheibe 142 ist durch formschlüssige Mitnahmemittel drehfest mit dem Antriebsteil 112 des Rotors 72 des Hydromotors 14 gekoppelt, gegenüber diesem Antriebsteil jedoch - geringfügig - axial verschiebbar und wird durch Federelemente 144, die sich einerseits an inneren Stufenflächen 146 hülsenförmiger Gehäuseteile 147 der kleinen Linearzylinder 113a bis 113h und andererseits an Dichthülsen 148 abstützen, die ihrerseits die Steueröffnungen 143a bis 143h der zweiten Steuerscheibe 142 koaxial umschließend an dieser abgestützt sind, mit ihrer der ersten Steuerscheibe 138 zugewandten ebenen Seite metallisch dichtend in gleitende Anlage mit dieser ersten Steuerscheibe 138 gedrängt.

Die Steueröffnungen 143a bis 143h sind wiederum als kreisrunde Bohrungen oder Ausstanzungen ausgebildet, deren in Drehrichtung ($\varphi$-Richtung) gesehene azimutale lichte Weite $\varphi_1$ einen Wert hat, der mit der entsprechenden azimutalen Ausdehnung $\varphi_2$ der Steuerkanäle 133a bis 133c bzw. der Entlastungskanäle 134a bis 134c und der azimutalen Ausdehnung $\varphi_3$ der abfallenden Flanken 126a bis 126c und der ansteigenden Flanken 127a bis 127c der Kurvenrippe 123 durch die Beziehung

$$\varphi_3 = 2\varphi_1 + \varphi_2$$

verknüpft ist, wobei gelten muß, daß

$$\varphi_2 < \varphi_3$$

und vorzugsweise

$$\varphi_1 > \varphi_2$$

ist.

Mit diesen Relationen der azimutalen Offnungsweite $\varphi_2$ der Steuerkanäle 133a bis 133c und der Entlastungskanäle 134a bis 134c der ersten Steuerscheibe 138 sowie der azimutalen Öffnungs-weiten $\varphi_1$ der Steueröffnungen 143a bis 143h der zweiten Steuerscheibe 142 ergibt sich, daß jeweils diejenigen der kleinen Linearzylinder 113a bis 113h, der an Stützkugeln 108 sich auf einer der abfallenden Flanken 126a bis 126c der Kurvenrippe 123 abwälzen, auf praktisch der gesamten "Länge" dieser abfallenden Flanken 126a bis 126c mit dem hohen Ausgangsdruck der Hydraulikpumpe 13 beaufschlagt sind, während diejenigen der Linearzylinder 113a bis 113h deren Stützkugeln 118 sich auf ansteigenden Flanken 127a bis 127c der Kurvenrippe 123 abwälzen, auf deren gesamter azimutalen Ausdehnung $\varphi_3$ zum -drucklosen-Vorratsbehälter 36 der Hydraulikpumpe 13 hin druckentlastet sind, was optimaler Ausnutzung der Linearzylinder 113a bis 113h und der Kurvenrippe 123 zur Drehmoment-Entfaltung des Hydromotors 14 entspricht.

Die hülsenförmigen Gehäuseteile 147 der kleinen Linearzylinder 113a bis 113h des Antriebsteils 112 sind als gestufte Hülsen ausgebildet, deren innere Mantelflächen über die innere Stufenfläche 146 aneinander anschließen, der eine äußere Gehäusestufe 150 entspricht, über die die äußeren Mantelflächen der Abschnitte 149 und 151 der Gehäuseteile 147 aneinander anschließen. In den den geringeren Innendurchmesser aufweisenden, kleineren Gehäusestufen 151, die zur Kurvenrippe 123 hinweisend angeordnet sind, sind die Kolbenelemente 117 druckdicht verschiebbar geführt. In den dem Durchmesser nach größeren Gehäusestufen 149 sind, gegen diese je durch eine Ringdichtung 152 abgedichtet, die Dichthülsen 148 verschiebbar angeordnet, die mit schmalen, ringförmigen Endstirnflächen 155 die Steueröffnungen 143a bis 143h der zweiten Steuerscheibe 142 dichtend umschließend, an dieser abgestützt sind. Zwischen den Dichthülsen 148 und den Innenstufen 146 der Linearzylinder-Gehäuse 147 sind als Federelemente 144 unter Vorspannung stehende Federringe angeordnet, welche die Dichthülsen gegen die zweite Steuerscheibe 142 und dadurch diese in dichtende Anlage mit der ersten Steuerscheibe 138 drängen.

Das Antriebsteil 112 des Rotors 72 des Hydromotors 14 besteht aus einem flach-topfförmigen Käfigteil 153, das im zentralen Bereich seines Bodens 154 an der dem rechten Endstirnwandteil 78 des Motorgehäuses 73 zugewandten, ringförmigen Stirnfläche 156 des flanschförmigen Mittelstückes 106 der Rotorwelle 102 befestigt ist, sowie einem ringscheibenförmigen Käfigteil 157, das an der der Kurvenrippe 123 zugewandten ringförmigen Stirnfläche 158 des flanschförmigen Mittelstückes 106 der Rotorwelle 102 befestigt, z.B. angelötet oder angeschweißt, ist. Der Boden 154 des topfförmigen Käfigteils 153 und das ringscheibenförmige Käfigteil 157 sind mit miteinander fluchtenden, mit den zentralen Achsen 114a bis 114h der kleinen Linearzylinder 113a bis 113h koaxialen Bohrungen 159 bzw. 161 versehen, deren Durchmesser dem Außendurchmesser der kleineren Gehäuseabschnitte 151 der Linearzylindergehäuse 147 entsprechen, die mit ihren äußeren Ringschultern 150 am Boden 154 des flach-topfförmigen Käfigteils 153 abgestützt sind und mit ihren schlankeren Gehäuseabschnitten 151 durch die miteinander fluchtenden Bohrungen 159 und 161 der beiden Käfigteile 153 und 157 hindurchtreten.

Der Mantel 162 des flach-topfförmigen Käfigteils ist zum rechten Stirnwandteil 78 hinweisend angeordnet und ist an seinem über die Abschnitte 149 größeren Durchmessers der hülsenförmigen Gehäuseteile 147 der Linearzylinder 113a bis 113h hinausragenden, der ersten Steuerscheibe 138 zugewandten freien Rand mit randoffenen Ausnehmungen 163 versehen, in welche radiale Mitnahmezapfen 164 der zweiten Steuerscheibe 142 formschlüssig eingreifen, welche dadurch formschlüssig mit dem Rotor 72 gekoppelt, gegenüber diesem jedoch in axialer Richtung hinreichend weit verschiebbar ist, um geringfügige axiale Auslenkungsbewegungen ausführen zu können, durch die die dichtende Anlage der beiden Steuerscheiben 138 und 142 aneinander sichergestellt ist. Die Dichthülsen 148 haben zentral durchgehende Öffnungen 166, über die die Steueröffnungen 143a bis 143h der zweiten Steuerscheibe 142 mit den Antriebsdruckräumen 121 der Linearzylinder 113a bis 113h - je einzeln - kommunizierend verbunden sind.

Der insoweit erläuterte Aufbau des Hydromotors 14 - Entsprechendes gilt sinngemäß für den Hydromotor 16 -, der ggf. für den Antrieb des Vorderrades 17 des Fahrrades 10 vorgesehen ist, ist fertigungstechnisch sehr einfach, so daß die Herstellungskosten solcher Motoren 14 bzw. 16, ungeachtet eines vielteiligen Gesamtaufbaues, günstig niedrig sind:

die (End-) Stirnwandteile 77 und 78 sind als einfache Gußteile, z.B. AL-Druckgußteile, realisierbar. Die beiden Steuerscheiben 138 und 142 können als einfache Stanzteile hergestellt werden. Dasselbe gilt sinngemäß für die Käfigteile 153 und 157. Die hülsenförmigen Gehäuseteile 147 der kleinen Linearzylinder 113a bis 113h sind in der erforderlichen Präzision auf Dreh-Automaten kostengünstig herstellbar. Als Stützkugeln 118 sind handelsübliche Lagerkugeln einsetzbar. Die Kurvenrippe 123 ist als Prägeteil realisierbar, bei dem sich im Verlauf der Benutzung des Fahrrades 10 die günstigste Form der Lauffläche 122 gleichsam von selbst einrolliert. Als Kolbenelemente 117 können billige Kunststoff-Spritzgußteile oder Leichtmetal-Druckgußteile eingesetzt werden. Die Dichthülsen 148 können ebenfalls als Kunststoffteile ausgebildet sein. Als Federelemente 144 können handelsübliche gewellte Federstahl-Ringe verwendet werden. Das zentrale Wellenteil 102 ist einer kostengünstigen Fertigung auf einem Dreh-Automaten ohne weiteres zugänglich. Das keinerlei Druck-Belastung ausgesetzte Mantelteil 74 des Motorgehäuses 73 kann aus üblichem Stahlblech gefertigt werden.

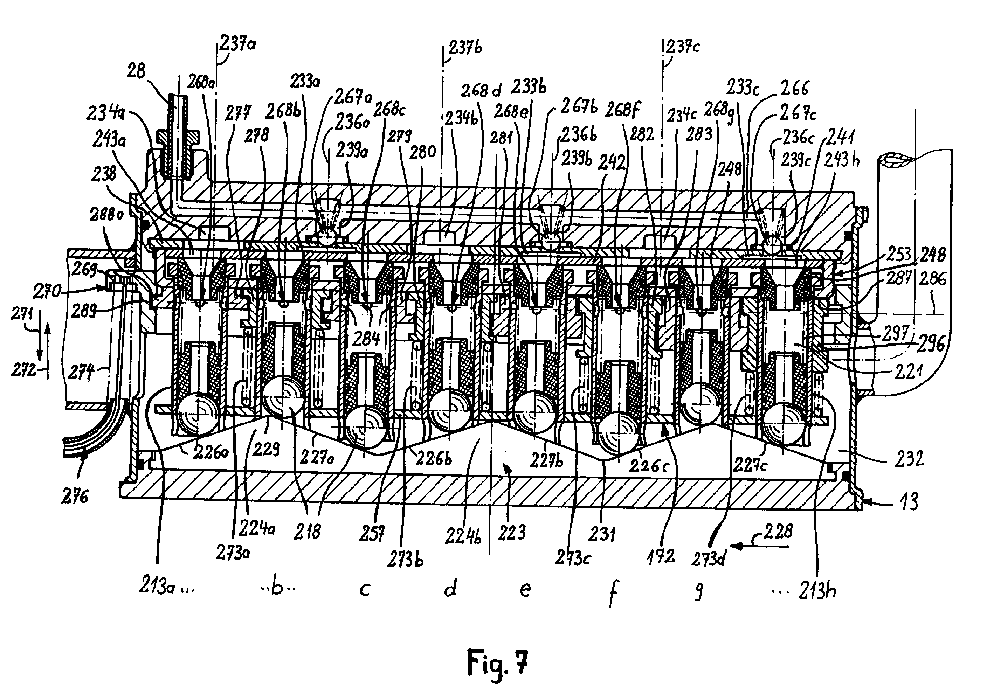

Das zur Einfachheit des Aufbaues und der Herstellung des Hydromotors 14 Gesagte gilt sinngemäß auch für die Hydraulikpumpe 13 des Fahrrades 10, deren Konstruktions-Prinzip demjenigen des Hydromotors 14 völlig analog ist. Soweit daher in den Figuren 6 und 7, anhand derer nunmehr die Hydraulikpumpe 13 näher erläutert werden wird, Bau- und Funktionselemente mit Bezugszeichen versehen sind, die um "100" höher sind als in den Figuren 4 und 5 für Bau- und Funktionselemente des Hydromotors 14 verwendete Bezugszeichen, soll durch die "erhöhten" Bezugszeichen der Figuren 6 und 7 auf die diesbezügliche Identität hingewiesen und gleichzeitig auch auf die anhand der Figuren 4 und 5 gegebene Beschreibung der solchermaßen bezeichneten Bau- und Funktionselemente verwiesen sein, um insoweit Wiederholungen zu vermeiden.

Dieser Verweis gilt mit Bezug auf die Hydraulikpumpe 13 insbesondere hinsichtlich deren folgender Elemente:

der Gestaltung ihres Rotors 172, ihres Gehäuses 173 mit Mantelteil 174 und Stirnwandteilen 177 und 178 sowie der Anordnung der zentralen Achse 176 und der Ringdichtungen 179 und 181, mittels derer das Mantelteil 174 gegen die Stirnwandteile 177 und 178 abgedichtet ist. Dies gilt weiter für die Gestaltung und Anordnung von Schrägkugellagern 184 und 186, deren Lagerschalen 187 und 188, die Anordnung zentraler Öffnungen 189 und 191 der Endstirnwandteile 177 und 188 und die Anordnung radialer Stufen 192 und 193 der zentralen Öffnungen 189 bzw. 191. Des weiteren für die Anordnung und Ausbildung radialer Flansche 197 und 198 von Gewindehülsen 199 und 201 eines zentralen Wellenteils 202, das mit Außengewinde-Endabschnitten 203 und 204 versehen ist, sowie das flanschförmige Mittelstück 206 und die Wellenstücke 207 und 208 aufweist, die durch die Ringnuten 209 und 211 gegen die Gewinde-Endabschnitte 203 und 204 abgesetzt sind. Mit 212 ist - in Analogie zum Antriebsteil 112 des Motors 14 - das "angetriebene" Teil der Pumpe 13 bezeichnet, das die kleinen Linearzylinder 213a bis 213h umfaßt, deren zentrale Längsachsen mit 214a bis 214h bezeichnet sind.

Entsprechendes gilt für die Gehäuseelemente 216 der kleinen Linearzylinder 213a bis 213h, deren Kolbenelemente 217, Stützkugeln 218 und Lagerpfannen 219 der Kolbenelemente, in denen die Stützkugeln 218 frei drehbar gelagert sind.

Mit 221 sind - in Analogie zu den Antriebsdruckräumen 121 der Linearzylinder 113a bis 113h des Hydromotors 14 die Pumpenkammern der Hydraulikpumpe 13 bezeichnet. Entsprechendes gilt für die Lauffläche 222 der Kurvenrippe 223, deren Zacken 224a, 224b und 224c, deren abfallende Flanken 226a, 226b und 226c, deren ansteigende Flanken 227a bis 227c, deren Spitzen 229 sowie deren Täler 231.

Auch bei der Hydraulikpumpe 13 ist deren Innenraum 232 drucklos gehalten.

Die gehäusefeste Steuerscheibe 238 und die sich mit dem Rotor 172 der Hydraulikpumpe 13 drehende Steuerscheibe 242 sind den Steuerscheiben 138 und 142 des Hydromotors 14 analog. Dasselbe gilt bezüglich der Druck-Auslaßkanäle 233a bis 233c sowie der Nachfüll-Kanäle 234a bis 234c, die den Steuerkanälen 133a bis 133c und Entlastungskanälen 134a bis 134c des Hydromotors 14 analog sind, sowie bezüglich deren zentraler Achsen 236a bis 236c und 237a bis 237c und auch bezüglich der Anschlußkanäle 239a bis 239c der Hydraulikpumpe 13, die den Versorgungskanälen 139a bis 139c des Hydromotors 14 analog sind und mittels je einer Ringdichtung gegen den Innenraum 232 der Pumpe 13 abgedichtet sind. Analogie besteht auch hinsichtlich der Anordnung der Steueröffnungen 243a bis 243h sowie der Anordnung nicht eigens dargestellter Federelemente, die funktionell den Federelementen 144 entsprechen und ebenso wie diese an schmalen, inneren Stufenflächen 246 der hülsenförmigen Gehäuseteile 217 der kleinen Linearzylinder 213a bis 213h sowie den Dichthülsen 248 abgestützt sind. Diese hülsenförmigen Gehäuseteile 247 sind hinsichtlich ihrer Gestaltung mit einem dem Durchmesser nach größeren Hülsenabschnitt 249 und einem dem Durchmesser nach kleineren Hülsenabschnitt 251 insoweit identisch mit den hülsenförmigen Gehäuseteilen 147 des Hydromotors 14. Die Ringdichtungen 252 an den Außenseiten der Dichthülsen 248 entsprechen funktionell den Ringdichtungen 152 des Hydromotors 14. Prinzipielle bauliche Identität zwischen Pumpe 13 und Hydromotor 14 besteht auch hinsichtlich des flach-topfförmigen Käfigteils 253 mit Boden 254 sowie des ringscheibenförmigen Käfigteils 257 und der an diesen angeordneten Bohrungen 259 bzw. 261.

Das flach-topfförmige Käfigteil 253 und das ringscheibenförmige Käfigteil 157 sind an den ringförmigen Stirnflächen 256 bzw. 258 des flanschförmigen Mittelstückes 206 des zentralen Wellenteils 102 befestigt. Am Mantel 262 sind wieder nicht eigens dargestellte randoffene Ausnehmungen vorgesehen, mit denen radiale Mitnahmezapfen der zweiten Steuerscheibe 242 zu deren drehfester Kopplung mit dem Rotor 172, in Umfangsrichtung gesehen, in formschlüssigem Eingriff stehen.

Die insoweit durch ihre bauliche Analogie zu dem Hydromotor 14 bzw. 18 erläuterte Hydraulikpumpe 13 arbeitet wie folgt:

Wird der Rotor 172 der Hydraulikpumpe 13 mittels der Pedale 11 und 12, in Richtung des Pfeils 264 der Figur 6 gesehen, im Gegenuhrzeigersinn, d.h. gemäß der Darstellung der Figur 7 in Richtung des Pfeils 228 angetrieben, so wird jeweils durch diejenigen der nunmehr als Kolbenpumpen wirkenden Linearzylinder 213a bis 213h, deren Stützkugeln 218 sich auf ansteigenden Flanken 227a bis 227c der Kurvenrippe 223 abwälzen, Druckmittel-Hydrauliköl aus den Pumpenkammern 221 dieser Linearzylinder über die Steueröffnungen 243a bis 243h der sich mit dem Rotor 172 drehenden Steuerscheibe 242 und diejenigen Druckauslaß-Kanäle 233a bis 233c der gehäusefesten Steuerscheibe 238, die den ansteigenden Flanken 227a bis 227c der Kurvenrippe 223 axial gegenüberliegend angeordnet sind, sowie über die Anschlußkanäle 239a bis 239c und eine diese miteinander verbindende Anschlußleitung 266 zum Druckausgang 28 der Hydraulikpumpe 13 und von diesem zum jeweiligen Antriebs-Hydromotor 14 bzw. 18 gefördert, wodurch diese angetrieben werden.

In die mit dem Druckausgang 28 verbundenen Druck-Auslaßkanäle 233a bis 233c der Hydraulikpumpe 13 sind Rückschlagventile 267a bis 267c eingesetzt, die durch relativ höheren Druck in den Pumpenkammern 221 der Hydraulikpumpe 13 als in der Anschlußleitung 266 in Öffnungsrichtung beaufschlagt sind, und bei relativ höherem Druck in dieser Anschlußleitung 266 als in den Pumpenkammern 221 diese gegen die Anschlußleitung 266 absperren. Diese Rückschlagventile 267a bis 267c entsprechen beim dargestellten, speziellen Ausführungsbeispiel gemäß Figur 7 dem Ausgangs-Rückschlagventil 29 des Hydraulikschemas gemäß Figur 3.

Um eine einer "Gangschaltung" mit definiert verschiedenen Übersetzungsverhältnissen zwischen den Umdrehungszahlen der Pedale 11 und 12 und der Umdrehungszahlen des jeweils angetriebenen Rades 16 und/oder 17 des Fahrrades 10 entsprechende Funktion zu erzielen, ist die Hydraulik-Pumpe 13 mit einer insgesamt mit 270 bezeichneten Umschalteinrichtung versehen, mittels derer die auf eine Umdrehung des Rotors 172 der Pumpe 13 bezogene Fördermenge der Pumpe 13 stufenweise veränderbar ist.

Zu diesem Zweck sind beim dargestellten, speziellen Ausführungsbeispiel sieben der insgesamt acht je eine Kolbenpumpe bildenden Linearzylinder 213a bis 213h mit Ventilen 268a bis 268g versehen, die durch Verschieben eines Steuerringes 269 nacheinander geöffnet und wieder geschlossen werden können, wobei im geöffneten Zustand dieser Ventile die Pumpenkammern 221 der einzelnen Pumpenelemente 213a bis 213g mit dem - drucklosen - Innenraum 232 der Pumpe 13 kommunizierend verbunden, d.h. diese Pumpenelemente 213a bis 213g gleichsam "kurzgeschlossen" sind und im gesperrten Zustand dieser Ventile diese Verbindung unterbrochen ist, so daß dann sämtliche Pumpenelemente, pro Umdrehung des Rotors 172 der Pumpe 13 jeweils dreimal im Förderbetrieb arbeiten.

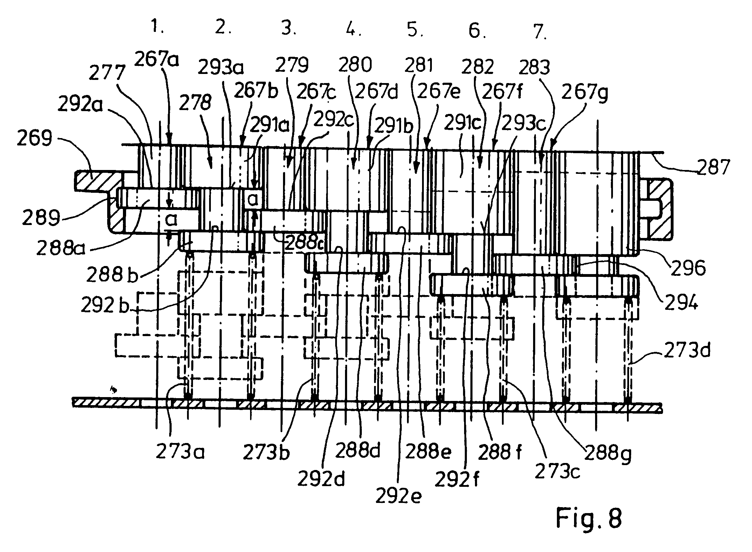

Die Umschalteinrichtung 270 ist so gestaltet, daß mit zunehmender Verschiebung des Steuerringes 269 in der durch den Pfeil 271 repräsentierten "Zurückschalt-Richtung", beginnend mit dem Ventil 268a nacheinander auch die weiteren Ventile 268b bis 268g in ihre Offen-Stellung gelangen und bei einer Verschiebung des Steuerringes 269 in der entgegengesetzten, durch den Pfeil 272 markierten "Hochschalt-Richtung" in der umgekehrten Reihenfolge wieder in ihre Sperrstellung gelangen. Die größtem Fördervolumen der Pumpe 13 pro Umdrehung ihres Rotors 172 entsprechende Grundstellung der Ventile 268a bis 268g ist die in der Fig.7 dargestellte Sperrstellung, in die sie - beim dargestellten, speziellen Ausführungsbeispiel - durch Rückstellfedern 273a bis 273d, die einseitig an dem ringscheibenförmigen Käfigteil 257 abgestützt sind sowie durch eine Rückstellfeder 274 einer zur Verschiebung des Steuerringes 269 vorgesehenen Betätigungseinrichtung 276 gedrängt werden. Die Fig. 8 zeigt in vereinfachter, schematischer Darstellung - gestrichelt - die Offen-Stellung der Ventile 267a bis 267g.

Die Ventilkörper 277 bis 283 der Ventile 268a bis 268g sind als Flanschhülsen ausgebildet, welche die ihrerseits hülsenförmigen Gehäuseelemente 216 auf einem Abschnitt deren Länge koaxial umschließen und an deren äußeren Mantelflächen mit metallischer Dichtung gleitend-verschiebbar gelagert sind. In den in der Figur 7 dargestellten Grundstellungen der Ventile 267a bis 267g sind deren Ventilkörper 277 bis 283 an der dem ringscheibenförmigen Käfigteil 257 zugewandten Seite 287des Bodens 254 des flach-topfförmigen Käfigteils 253 abgestützt. Die Ventilkörper 277 bis 283 sind als rotationssymmetrische Stahl-Drehteile ausgebildet. Die Ventilöffnungen 284 sind als Radialbohrungen der hülsenförmigen Gehäuseteile 247 ausgebildet, wobei die zentralen Achsen dieser Ventilöffnungen 284 sämtlich in einer gemeinsamen, rechtwinklig zur zentralen Längsachse 176 der Pumpe 13 verlaufenden Ebene 286 liegen, die zwischen den beiden Käfigteilen 253 und 257, in unmittelbarer Nähe der dem ringscheibenförmigen Käfigteil 257 zugewandten, äußeren Bodenfläche 287 des topfförmigen Käfigteils 253 verläuft.

Der gemäß der Abwicklungsdarstellung der Figur 7 linke, äußere Ventilkörper 277 des nachfolgend sowie in der Fig. 8 auch als "erster" bezeichneten Linearzylinders 213a hat an seinem dem ringscheibenförmigen Käfigteil 257 zugewandten - inneren - Endabschnitt einen radialen Mitnahmeflansch 288a, der, in axialer Richtung gesehen, in formschlüssigem Eingriff mit einer inneren umlaufenden Nut 289 des Steuerringes 269 steht, so daß dieser "erste" Ventilkörper 277 die Steuerbewegungen des Steuerringes 269 jeweils mit ausführt.

Der Ventilkörper 278 des zweiten Linearzylinders 213b der Hydraulikpumpe 13 ist an seinem inneren Ende ebenfalls mit einem radialen Mitnahmeflansch 288b versehen, desgleichen die Ventilkörper 279 bis 283 der weiteren Linearzylinder 213c bis 213g mit den Mitnahmeflanschen 288c bis 288g.

In der dargestellten Grundstellung gesehen, ist der radiale Mitnahmeflansch 288b des Ventilkörpers 278 des zweiten Linearzylinders 213b von dem radialen Mitnahmeflansch 288a des Ventilkörpers 277 des ersten Linearzylinders 213a in einem axialen Abstand a angeordnet, der dem Öffnungshub des Ventils 268a entspricht, der für sämtliche Ventile 268a bis 268g dem Betrage a nach derselbe ist. Der Ventilkörper 278 des Ventils 268b des zweiten Linearzylinders 213b ist an seinem äußeren, gemäß Fig. 8 oberen Ende mit seinem radialen Stützflansch 291a versehen, der, gemäß der Darstellung der Figur 7, d.h. in der Grundstellung der Ventile 268a bis 268g gesehen, an der äußeren Ringfläche 292a des radialen Mitnahmeflansches 288a des ersten Ventilkörpers 277 abgestützt ist und von der äußeren Ringfläche 292c des radialen Mitnahmeflansches 288c des Ventilkörpers 279 des dritten Ventils 268c wiederum in einem dem Öffnungshub a der Ventile 268a bis 268g entsprechenden lichten axialen Abstand a angeordnet ist. In dieser Grundstellung der Ventile 268a bis 268g und ihrer Ventilkörper 277 bis 283 ist der radiale Mitnahmeflansch 288c des dritten Ventils 268c auch an dem radialen Mitnahmeflansch 288b - an dessen dem Stützflansch 291a zugewandten äußeren Ringfläche 292b - des zweiten Ventils 268b axial abgestützt.

Auf analoge Weise ist der Ventilkörper 281 des fünften Ventils 268e mit seinem radialen Mitnahmeflansch 288e einerseits an der äußeren Ringfläche 292d des radialen Mitnahmeflansches 288d des Ventilkörpers 280 des vierten Ventils 268d und andererseits an der inneren Ringfläche 293c des Stützflansches 291c des Ventilkörpers 282 des sechsten Ventils 268f abgestützt.

Wiederum in der Grundstellung der Ventile 268a bis 268g gesehen, ist der Ventilkörper 283 des siebten Ventils 268g mit seinem radialen Mitnahmeflansch 288g - in dem axialen Abstand a von der inneren Ringfläche 293c des Stützflansches 291c des Ventilkörpers 282 des sechsten Ventils 268f an der äußeren ringförmigen Stirnfläche 292f des radialen Mitnahmeflansches 288f des Ventilkörpers 282 des sechsten Ventils 268f abgestützt. Außerdem steht der radiale Mitnahmeflansch 288g des Ventilskörpers 283 des siebten Ventils 268g mit einer äußeren Ringnut 294 einer Steuerhülse 296 in axial-formschlüssigem Eingriff, welche in axialer Richtung verschiebbar einen äußeren Abschnitt des hülsenförmigen Gehäuseelementes 216 des achten Linearzylinders 213h koaxial umschließend an diesem gleitend sowie drehbar gelagert ist, wobei dieser - letzte - Linearzylinder 213h nicht "abschaltbar", d.h. seine Pumpenkammer über ein zu den Ventilen 268a bis 268g analoges Ventil mit dem Innenraum 232 der Hydraulikpumpe 213 nicht verbindbar ist.

Wird, ausgehend von der in der Figur 7 sowie in der Fig. 8 in ausgezogenen Linien dargestellten Grundstellung der Ventilkörper 277 bis 283 und des Steuerringes 269 dieser um einen Öffnungshub des Betrages a in der "Zurück-schalt"-Richtung verschoben, so wird der erste Linearzylinder 213a gleichsam "kurzgeschlossen" und trägt nichts mehr zu der von der Hydraulikpumpe 13 geförderten Druckmittel-Menge bei.

Bezogen auf die Pedalkraft $K_1$, mit der der Fahrer in einer bestimmten Betriebssituation des Rades 10 dessen Pedale 11 und 12 betätigen muß, um ein vorgegebenes Vortriebs-Moment zu erzielen, reduziert sich nunmehr die Kraft, die notwendig ist, um dasselbe Vortriebs-Moment zu erzeugen, auf den Wert

**12**

$$K_2 = K_1 \cdot \frac{F_b + F_c + \ldots + F_h}{F_a + F_b + F_c + \ldots + F_h}, \quad (1)$$

wobei mit $F_a$, $F_b$, $F_c$ ..., $F_h$ die wirksamen Quer-schnittsflächen der Kolbenelemente 217 der Linearzylinder 213a bis 213h bezeichnet sind. Damit einhergehend, wird die auf eine Umdrehung des Rotors 172 der Hydraulik-Pumpe 13 bezogene Fördermenge der Hydraulikpumpe 13 um den entsprechenden Faktor reduziert. Der Fahrer muß, um die im Moment des Zurückschaltens gegebene Fahrt-Geschwindigkeit aufrecht zu erhalten, um den Faktor

$$\frac{F_a + F_b + F_c + \ldots + F_h}{F_b + F_c + \ldots + F_h} \quad (2)$$

schneller treten, falls er nicht unter Hinnahme eines entsprechenden "Verlustes" mit gleicher Pedalkraft weiterfahren will.

Gleiche Querschnitte sämtlicher Kolbenelemente 217 vorausgesetzt, d.h.:

$$F_a = \ldots = F_h \quad (3)$$

ergibt sich, daß in der "niedrigsten" Schaltstufe der Hydraulikpumpe 13, d.h. wenn nur noch der "letzte" Linearzylinder 213h als Pumpenelement wirkt, die auf eine Umdrehung des Pumpenrotors 172 bezogene Fördermenge der Hydraulikpumpe 13 nur noch 1/8 derjenigen Druckmittelmenge beträgt, die mittels der Pumpe 13 gefördert wird, wenn deren sämtliche Linearzylinder 213a bis 213h für den Förderbetrieb ausgenutzt sind, d.h. sämtliche Ventile 268a bis 268g geschlossen sind.

Die Hydraulikpumpe 13, in deren spezieller, zur Erläuterung gewählter Gestaltung acht Linearzylinder 213a bis 213h vorgesehen sind, vermittelt somit die Funktion eines acht-stufigen Schaltgetriebes. Da diese acht Schaltstufen auch dann zur Verfügung stehen, wenn das Fahrrad 10 mit zugeschaltetem Vorderradantrieb 18 betrieben wird, in welchem Falle sich eine Aufteilung der von der Hydraulikpumpe 13 geförderten Druckmittelmenge auf den Hinterachs-Antriebsmotor 14 und den Vorderachs-Antriebsmotor 18 ergibt, mit der Folge, daß das Verhältnis der Raddrehzahlen zu den Umdrehungszahlen des Pumpen-Rotors 172 um den Faktor

$$F_H/(F_v + F_H) \quad (4)$$

reduziert wird, wobei mit $F_H$ die Summe der Querschnittsflächen sämtlicher Kolbenelemente 117 des Hinterachs-Antriebsmotors 14 und mit Fv die Summe der Querschnittsflächen sämtlicher Kolbenelemente des Vorderachs-Antriebsmotors 18 bezeichnet sind, ist die Funktion des anhand der Figuren 3 bis 7 erläuterten hydraulischen Antriebes des erfindungsgemäßen Fahrrades 10 demjenigen eines konventionellen Antriebs analog, bei dem zwei mittels der Pedale 11 und 12 angetriebene Kettenräder und acht Antriebsritzel unterschiedlichen Durchmessers vorgesehen sind.

Die durch die einzelnen Linearzylinder 213a bis 213h gebildeten Kolbenpumpen sind "selbstsaugend" ausgebildet, d.h. ihre Kolbenelemente 217 sind über Rückstellfedern 297 an den Dichthülsen 248 abgestützt, wodurch die Kolbenelemente 217 im Verlauf der Saughübe der einzelnen Pumpenelemente 213a bis 213h im Sinne einer Volum-Erweiterung der Pumpenkammern 221 verschoben werden und wodurch auch die Dichthülsen 248 in dichtender Anlage mit der rotorfesten Steuerscheibe 242 gehalten werden.

Für die nachfolgende Erläuterung wird als niedrigste, erste Schaltstufe der Pumpe 13, die üblicherweise zum Anfahren ausgenutzt wird, diejenige bezeichnet, in welcher nur das nichtabschaltbare Pumpenelement 213h fördert. Als "höchste" Schaltstufe der Pumpe 13 wird diejenige bezeichnet, bei der sämtliche Pumpenelemente 213a bis 213h im Förderbetrieb arbeiten und demgemäß die auf eine Umdrehung des Rotors 172 bezogene Fördermenge der Pumpe 13 maximal ist und die höchste Fahrtgeschwindigkeit erreichbar ist.

Geht man gemäß der schematisch vereinfachten Darstellung der Figur 7 davon aus, daß die wirksamen Querschnittsflächen $F_1$, $F_2$... bis $F_n$ (n = 8 beim dargestellten Ausführungsbeispiel) der Kolbenelemente 217 der Linearzylinder 213h bis 213a jeweils denselben Wert haben, so ergibt sich insoweit eine etwas ungünstige Abstufung der Fördermengen der Pumpe 13 in deren einzelnen Schaltstufen, als beim Übergang von der ersten Schaltstufe in die zweite, die auf eine Umdrehung des Rotors 172 der Rotorpumpe 13 bezogene Fördermenge derselben sich verdoppelt, während beim Übergang von der 7. Schaltstufe in die letzte, die 8. Schaltstufe, die Fördermenge der Pumpe 13 nur um 1/8 ihrer maximalen Fördermenge zunimmt.

Eine demgegenüber günstigere Abstufung, derart, daß von Schaltstufe zu Schaltstufe die auf eine Umdrehung des Rotors 172 der Pumpe 13 bezogene Fördermenge stets um denselben Faktor q zunimmt, kann auf einfache Weise dadurch erzielt werden, daß, in der Reihenfolge 1 bis n der Schaltstufen gesehen, die effektive Querschnittsfläche $F_2$ des Kolbenelementes 217 des beim Übergang in die zweite Schaltstufe zugeschalteten Linearzylinders 213g den Wert $F_2 = q\,F_1$ hat, wobei mit $F_1$ die effektive Querschnittsfläche des Kolbenelementes 217 des der ersten Schaltstufe zugeordneten Linearzylinders 213h bezeichnet ist, und die wirksamen Querschnittsflächen $F_2$ bis $F_n$ der dritten bis n-ten Schaltstufen durch die Beziehung

$$f_i = q\,F_1\,(1 + q)^{i-2} \qquad (2 \leqq i \leqq n)$$ gegeben sind.

Aus den vorgenannten Beziehungen folgt, daß, eine entsprechende Auslegung der Pumpe 13 vorausgesetzt, bei einem "Hochschalten" um eine Schaltstufe die auf eine Umdrehung des Rotos 172 der Pumpe 13 bezogene Fördermenge derselben jeweils um den Faktor $(1 + q)$ zunimmt.

Eine Auslegung der Pumpe 13 dahingehend vorausgesetzt, daß dieser Faktor $(1 + q)$ den Wert 1,25 hat, ergeben sich für die effektiven Querschnittsflächen $F_1$ und $F_8$ der Kolbenelemente 217 der Pumpenelemente 213h und 213a annähernd gleiche Werte, wobei das Flächenverhältnis $F_1/F_8$ etwa 1/0,954 beträgt. Wenn sämtliche Pumpenelemente 213a bis 213h im Förderbetrieb arbeiten, ist die auf eine Umdrehung des Rotors 172 der Pumpe 13 bezogene Fördermenge um den Faktor 4,77 größer als für den Fall, daß nur das permanent im Förderbetrieb arbeitende Pumpenelement 213h - in der niedrigsten Schaltstufe - ausgenutzt ist.

Ist die Pumpe 13 so ausgelegt, daß der Faktor $(1 + q)$ den Wert 1,3 hat, so ergibt sich für das Flächenverhältnis $F_1/F_8$ ein Wert von 1/1,448 und für das maximale Untersetzungsverhältnis der Wert 6,275.

Eine weitere Untersetzungsstufe, die in jeder Schaltstufe der Pumpe 13 ausgenutzt werden kann, ist die Zuschaltung des Vorderrad-Antriebs-Hydromotors 18. Das diesbezügliche Untersetzungsverhältnis u ist durch die Beziehung

$$u = (Q_h + Q_v)/Q_h = 1 + Q_v/Q_h$$

gegeben, in der mit $Q_v$ die Schluckmenge des Vorderrad-Hydromotors 18 und mit $Q_h$ die Schluckmenge des Hinterrad-Antriebs-Hydromotors 14 bezeichnet sind.

Der Hydromotor 18 des Vorderrades, das bei einem Fahrrad in aller Regel weniger belastet ist als das Hinterrad, wird zweckmäßigerweise etwas "kleiner" dimensioniert als der Hinterrad-Antriebsmotor 14, wobei die Schluckmenge des Vorderrad-Antriebshydromotors 18 zwisschen 40 und 60 % derjenigen des Hinterrad-Antriebs-Hydromotors 14 des Fahrrades 10 beträgt.

Sowohl an der Vorderachse als auch an der Hinterachse des Fahrrades 10 ist die Radaufhängung auf dieselbe Weise realisiert, deren Erläuterung am Beispiel des Hinterrades 16 erfolgt, wobei hierzu wiederum auf die Figuren 1 und 4 Bezug genommen wird.

Die Gestaltung der Räder 16 und 17 und der Radbefestigungen ist in Analogie zu der Befestigung von Kraftfahrzeug-Rädern realisiert, derart, daß die Fahrzeugräder 16 und 17 zentrale Radschüsseln 301 haben, mittels derer sie an Nabenteilen, die bei der erläuterten Gestaltung der Antriebs-Hydromotore 14 bzw. 16 durch deren jeweils linke Gewindehülse 99 gebildet sind, entweder mittels einer zentralen Gewindemutter 302, wie im rechten Teil der Figur 4 dargestellt, oder mittels mehrerer Schraubbolzen 303 befestigbar sind, wie im linken Teil der Figur 4 angedeutet, wobei diese Schraubbolzen 303 in radialem Abstand von der Drehachse 76 und in axialsymmetrischer Gruppierung um diese angeordnet sind.

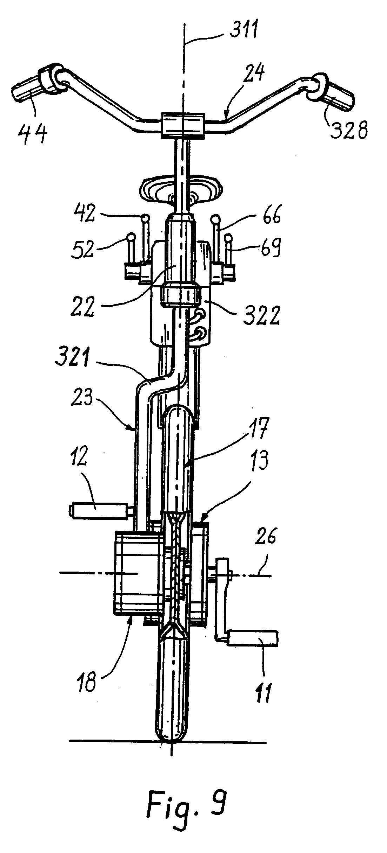

Wenn, wie im rechten Teil der Figur 4 dargestellt, die Radbefestigung mittels einer zentralen Gewindemutter 302 erfolgt, so ist die als Nabe dienende Gewindehülse 99 mit einem äußeren, radialen Flansch 304 versehen, an dem die Radschüssel 301 des jeweiligen Rades 16 bzw. 17 drehfest befestigbar ist, z.B. dadurch, daß, wie dargestellt, der radiale Flansch 304 mit einer Bohrung 306 versehen ist, in die ein als Ausprägung ausgebildeter Mitnahmezapfen 307 formschlüssig eingreift. Um bei dieser Art der Radbefestigung zu erreichen, daß die Radmittelebenen 308 mit der Rahmenebene, die durch die zentrale Längsachse 309 des Oberrohres 21 des Fahrradrahmens 19 sowie durch die auch die Drehachse des Lenkers 24 bildende zentrale Längsachse 311 des Steuerrohres 22 des Rahmens 19 markiert ist, zusammenfallen können, in der auch die zentrale Längsachse 312 des Sattelrohres 313 des Rahmens 19 verläuft, desgleichen auch die zentrale Längsachse 314 des vorderen, das Gehäuse 83 der Pumpe 13 mit dem Steuerrohr 22 verbindenden, aufsteigenden Rahmenrohres 316, sind das untere Rahmenrohr 82 und das rückwärtige, absteigende Rahmenrohr 317, die mit dem Gehäuse 73 des Hinterrad-Antriebs-Hydromotors 14 verbunden sind, wie auch das mit dem Gehäuse 73 des Vorderrad-Antriebsmotors 18 verbundene Gabelrohr 23 mit seitlichen Abkröpfungen 318 und 319 bzw. 321 versehen, wie in der Detaildarstellung der Figur 9 für die Vorderradaufhängung schematisch vereinfacht dargestellt.

Der Druckspeicher 38, die beiden 2/2-Wege-Ventile 41 und 49, das Zuschaltventil 56 für den Vorderradantrieb, das Lade-Steuerventil 61, das Druckbegrenzungsventil 47, die Ausgangs-Rückschlagventile 29, 37 und 57 der Pumpe 13, das Ausgangs-Rückschlagventil 62 des Hydromotors 14, der auf Pumpbetrieb umschaltbar ist, die Freilauf-Rückschlagventile 48 und 63 der beiden Hydromotore 14 und 18 und das Manometer 53, sind in der dem Hydraulikschema 54 gemäß Fig. 3 entsprechenden hydraulischen Schaltungsverknüpfung in einer insgesamt mit 322 bezeichneten hydraulischen Steuereinheit zusammengefaßt, die mit gut zugänglicher Anordnung der für die Ventile vorgesehenen Betätigungshebel der verschiedenen Exzenter 42, 52, 66 und 69 im vorderen oberen Rahmenbereich angeordnet ist, dort, wo das Oberrohr 21 des Vorderrdrahmens 19 und das aufsteigende Rahmenrohr 316 an das Steuerrohr 22 des Fahrradrahmens 21 anschließen. Lediglich das mittels des drehbaren Lenkgriffes 44 betätigbare, als Drehschieber ausgebildete Drosselventil 43 ist seinerseits in baulicher Integration mit dem Drehgriff 44 am Lenker 24 des Fahrrades angeordnet und über flexible, das Drehen des Lenkers 24 ermöglichende Druckmittelleitungen 323 und 324 an die - interne - Anschlußstelle 51 der Steuereinheit 322 und ebenfalls innerhalb dieser an den Druckversorgungseingang 31 des Hinterradantriebs des Hydromotors 14 angeschlossen.

Der Vorratsbehälter 36 des Gesamt-Hydraulikaggregats ist durch die miteinander in kommunizierender Verbindung stehenden Innenräume der Rahmenrohre 21, 82, 313 und 316 sowie auch des Gabelrohres 23 gebildet, welches seinerseits über einen flexiblen Druckmittelschlauch 326 an den durch den Rahmen 19 im übrigen gebildeten Teil des Vorratsbehälters 36 angeschlossen ist.

Die von der Pumpe 13 zum Antriebs-Hydromotor 14 des Hinterrades 16 führende Druckversorgungsleitung 32 sowie auch die zum Antriebs-Hydromotor 18 des Vorderrades 17 führende Druckversorgungsleitung 59 können auf größeren Abschnitten ihrer Länge innerhalb des unteren Rahmenrohres 82 bzw. des aufsteigenden Rahmenrohres 316 sowie des Gabelrohres 23 verlegt sein, wobei bezüglich des Vorderrad-Antriebs-Hydromotors 18 wiederum ein flexibler Verbindungsabschnitt 327 für die fest verlegten Druckversorgungs-Leitungsabschnitte vorgesehen ist. Die an die Druckversorgungs-Eingänge 31 der Hydromotore 14 bzw. 18 angeschlossenen Endabschnitte der Druckversorgungsleitungen 32 und 59 sind dann jeweils druckdicht aus den jeweiligen Rahmenrohren herausgeführt und an den jeweiligen Druckversorgungseingang 31 bzw. 58 des Hydromotors 14 bzw. des Hydromotors 18 angeschlossen.

Zur Realisierung einer einfachen Schaltstufen-Wahl ist auch der zweite Griff des Lenkers 24 als Drehgriff 328 ausgebildet, der, wie nicht eigens dargestellt, mit einer Rastklinke versehen ist, die selbsttätig in den den verschiedenen Schaltstufen entsprechenden Drehstellungen des Drehgriffes 328 einrastet und diesen in der jeweils gewählten Drehstellung hält und mittels eines Entriegelungs-Hebels aus der Raststellung ausrückbar ist. Anstelle eines solchen Drehgriffes kann natürlich auch an der Steuereinheit 322 ein in der Art einer Kulissenschaltung betätigbarer Schalthebel vorgesehen sein. Diesbezügliche Schaltstufen-Wahleinrichtungen sind sowohl aus der Fahrrad-Technik als auch aus der Motorrad-Technik in den verschiedensten Varianten bekannt und durch dem Fachmann jederzeit mögliche, sinngemäße Abwandlung auch bei dem Fahrrad 10 verwendbar.

Anstelle einer Motor- und/oder Pumpen-Konstruktion, bei der eine feststehende Kurvenrippe vorgesehen ist und der Rotor mit diesem rotierende Linearzylinder als Antriebs- bzw. Pumpenelemente umfaßt, ist auch für die Pumpe 13 und/oder die Antriebs-Hydromotore 14 bzw. 18 eine Konstruktion möglich, bei der die Kurvenrippe als Rotor ausgebildet ist und die Linearzylinder bzw. Pumpelemente gehäusefest angeordnet sind.

Auch die diesbezüglich erforderlichen Abwandlungen, insbesondere der Pumpe, um verschiedene Schaltstufen zu erzielen, sind dem Fachmann bei Kenntnis des Zweckes ohne weiteres möglich und erscheinen daher nicht eigens erläuterungsbedürftig.

## Patentansprüche

1. Fahrrad mit hydraulischer Antriebseinrichtung, die eine mittels eines Pedalantriebes rotatorisch antreibbare Hydraulikpumpe und einen das Hinterrad des Fahrrades antreibenden, seinerseits durch den von der Hydraulikpumpe geförderten Druckmittelstrom rotatorisch antreibbaren Hydromotor umfaßt, wobei die Pumpe in axialsymmetrischer Anordnung bezüglich der Drehachse des Pedalantriebs eine Mehrzahl als Kolbenpumpen ausgebildeten Pumpenelemente umfaßt, deren jedes innerhalb einer 360°-Umdrehung des pedalgetriebenen Pumpenrotors in aufeinanderfolgenden Sektorbereichen gleicher azimutaler Ausdehnung alternierend in den Förderbetrieb und den Füll-Betrieb gelangen,
   dadurch gekennzeichnet, daß mindestens acht Pumpenelemente (213a bis 213h) vorgesehen sind, deren jedes innerhalb einer Umdrehung des Pumpenrotors (172) mindestens dreimal im Förderbetrieb arbeitet und daß eine als Ventilsteuer-Einrichtung realisierte Schaltstufen-Wähleinrichtung (270) vorgesehen ist, mittels derer mit Ausnahme eines permanent im Förderbetrieb ausgenutzten Pumpenelementes (213h) die anderen Pumpenelemente (213a bis 213g) einzeln oder zu mehreren in zunehmender oder abnehmender Anzahl in den Umlaufbetrieb schaltbar sind.

2. Fahrrad nach Anspruch 1,
   dadurch gekennzeichnet, daß durch jede Umschaltung eines der Pumpenelemente (213a bis 213g) in den Förderbetrieb die auf eine Umdrehung des Pumpenrotors (172) bezogene Fördermenge der Hydraulik-Pumpe (13) um einen definierten Faktor q vergrößert wird, der zwischen 1,2 und 1,6, vorzugsweise um 1,4 beträgt.

3. Fahrrad nach Anspruch 1 oder Anspruch 2,
   dadurch gekennzeichnet, daß auch das Vorderrad (17) des Fahrrades (10) mit einem hydraulischen Antriebsmotor (18) versehen ist, der antriebsseitig ventilgesteuert an den Druckausgang (28) der Hydraulik-

EP 0 528 923 B1

Pumpe (13) anschließbar und rücklaufseitig an deren Vorratsbehälter (36) angeschlossen ist.

4. Fahrrad nach Anspruch 3,
dadurch gekennzeichnet, daß das Schluckvolumen des Vorderrad-Antriebs-Hydromotors (18) zwischen 40 % und 80 % und vorzugsweise um 60 % des Schluckvolumens des Antriebs-Hydromotors (14) des Hinterrades (16) des Fahrrades (10) beträgt.

5. Fahrrad nach einem der Ansprüche 1 bis 4,
dadurch gekennzeichnet, daß die Hydraulik-Pumpe (13) als Axialkolbenpumpe ausgebildet ist, deren Pumpenelemente (213a bis 213h) als Linearzylinder ausgebildet sind, deren Kolbenelemente (217) über Stützkugeln (218), die in Lagerpfannen (219) der Kolbenelemente (217) frei drehbar gelagert sind, an einer in axialer Richtung vorspringenden und zurückweisenden Stirnfläche (222) einer Kurvenrippe (223) abgestützt sind, wobei die Kolbenelemente (217) durch Pumpenfedern (297) in die die Abstützung an der Kurvenrippe (223) vermittelnden Positionen gedrängt werden, daß die Pumpenelemente (213a bis 213g) mit als Schieber-Ventilen ausgebildeten Steuerventilen versehen sind, deren Ventilkörper (277 bis 283) als außenseitig auf den Zylindergehäusen (216) druckdicht-gleitend verschiebbare Hülsen ausgebildet sind, in deren Grundstellungen radiale Ventilbohrungen (284) der Pumpenelement-Gehäuse (216) verschlossen sind und die durch Betätigung eines Schaltstufen-Wählelements (276) nacheinander in die Ventil-Bohrungen der verschiedenen Pumpen-Gehäuseelemente (216) freigebenden Funktionsstellungen bringbar und in der umgekehrten Reihenfolge sukzessive in die die Ventilöffnungen (284) wieder verschließenden Grundstellungen bringbar sind.

6. Fahrrad nach Anspruch 5,
dadurch gekennzeichnet, daß die radial zur zentralen Längsachse des jeweiligen Pumpenelements (213a bis 213g) verlaufenden, zentralen Achsen der Ventilöffnungen (284) in einer gemeinsamen, rechtwinklig zur - zentralen - Drehachse (176) des Pumpenrotors (172) verlaufenden Ebene (286) angeordnet sind, daß im Inneren des Gehäuses (173, 174) der Pumpe (13) ein Steuerring (269) axial hin- und herverschiebbar angeordnet ist, dessen axiale Steuer-Bewegungen mittels des Betätigungselements (276) der Schaltstufen-Wähleinrichtung (270) steuerbar sind, und daß die Ventilkörper (277 bis 283) radiale Stütz- und Mitnahmeflansche (288a bis 288g) haben, durch deren wechselseitigen Eingriff mit den Stütz- und Mitnahmeflanschen der in Umfangsrichtung gesehen benachbarten Ventilkörper sowie durch Eingriff des Steuerringes (269) mit einem der Ventilkörperflansche die Öffnungs- und Schließbewegungen der Schaltstufen-Steuerventile steuerbar sind (Fig. 8).

7. Fahrrad nach einem der Ansprüche 1 bis 6,
dadurch gekennzeichnet, daß die auf eine Umdrehung des Hinterrades (16) des Fahrrades 10) bezogene Schluckmenge seines Antriebs-Hydromotors (14) zwischen 50 % und 100 %, vorzugsweise um 75 % der maximalen, auf eine Umdrehung des Rotors (172) der Hydraulik-Pumpe (13) bezogenen Fördermenge derselben beträgt.

8. Fahrrad nach einem der Ansprüche 1 bis 7,
dadurch gekennzeichnet, daß der Antriebs-Hydromotor (14) für das Hinterrad (16) und im Falle eines zuschaltbaren oder mehr permanenten Allrad-Antriebs auch der Antriebs-Hydromotor (18) für das Vorderrad (17) des Fahrrades (10) als Axialkolben-Hydromotore ausgebildet sein, deren Rotor (72) ein aus dem Gehäuse (73) herausragendes Nabenteil (91, 304) hat, an dem mittels eines radschüsselförmigen, zentralen Radteils (301) das Hinterrad (16) bzw. das Vorderrad (17) des Fahrrades (10) befestigbar sind, derart, daß die durch die Radschüsselebene markierte Mittelebene (308) des Hinterrades (16) mit der Rahmenebene zusammenfällt und die Radmittelebene (308) des Vorderrades (17) dessen Drehachse (311) enthält, die durch die zentrale Längsachse des Steuerrohres (22) des Fahrradrahmens (19) markiert ist.

9. Fahrrad nach einem der Ansprüche 1 bis 8,
dadurch gekennzeichnet, daß ein mindestens durch Betätigung der Pumpe (13) aufladbarer Hochdruck-Speicher (38) vorgesehen ist, dessen Ausgangsdrucksniveau mindestens 100 bar und vorzugsweise 200 bar beträgt, und dessen Speichervolumen mindestens dem Zehnfachen, vorzugsweise dem Fünfzehn- bis Zwanzigfachen der auf eine Umdrehung bezogenen Schluckmenge des für das Hinterrad (16) vorgesehenen Antriebs-Hydromotors (14) beträgt, und daß dieser Druckspeicher (38) als Antriebs-Energie-Quelle an mindestens den Antriebshydromotor (14) des Hinterrades (16) des Fahrrades (10) anschließbar ist.

16

**10.** Fahrrad nach Anspruch 9,
dadurch gekennzeichnet, daß der Druckausgang (28) der Hydraulikpumpe (13) über ein erstes Ausgangs-Rückschlag-Ventil (29) an eine zum Druckversorgungseingang (31) des für das Hinterrad (16) des Fahrrades (10) vorgesehenen Hydromotors (14) führende erste Druck-Versorgungsleitung (32) angeschlossen ist,
daß diese Druckversorgungsleitung (32) durch Handbetätigung eines 2/2-Wege-Ventils (41), dessen Grundstellung (O) seine Durchflußstellung ist, absperrbar ist,
daß der Druckausgang (28) der Pumpe (13) über ein zweites Ausgangs-Rückschlagventil (37) an den Druckspeicher (38) angeschlossen ist,
und daß zwischen den Druckspeicher (38) und den Druckversorgungseingang (31) des Hinterrad-Antriebs-Hydromotors (14) ein Drosselventil (43) mit variablem, von Hand einstellbarem Drosselquerschnitt geschaltet ist, der zwischen hermetischer Absperrung des Speichers (38) gegen den Hydromotor (14) und Freigabe des vollen Querschnitts der vom Speicher (38) zum Motor (14) führenden zweiten Druckversorgungsleitung (39) veränderbar ist (Figuren 2 und 3).

**11.** Fahrrad nach Anspruch 10,
dadurch gekennzeichnet, daß das Drosselventil (43) als Drehschieber-Ventil ausgebildet ist, zu dessen Betätigung ein als Drehgriff (44) ausgebildeter Griff des Lenkers (24) des Fahrrades (10) ausgenutzt ist.

**12.** Fahrrad nach Anspruch 10 oder Anspruch 11,
dadurch gekennzeichnet, daß der Speicher (38) mittels eines weiteren 2/2-Wege-Ventils (49), das von Hand betätigbar ist, gegen die gemeinsame Anschlußstelle (51) des zweiten Ausgangs-Rückschlagventils (37) der Pumpe (13) und des Drosselventils (43) absperrbar ist.

**13.** Fahrrad nach Anspruch 12,
dadurch gekennzeichnet, daß die Grundstellung (O) des weiteren 2/2-Wege-Ventils (49) seine Durchflußstellung und seine zweite Funktionsstellung (I) die Sperrstellung ist.

**14.** Fahrrad nach einem der Ansprüche 9 bis 13,
dadurch gekennzeichnet, daß der Speicher (38) durch Umschalten des dem Hinterrad (16) zugeordneten Antriebs-Hydromotors (14) in den Bremsbetrieb aufladbar ist.

**15.** Fahrrad nach Anspruch 14,
dadurch gekennzeichnet, daß der Druckmittel-Auslaß (33) des Hinterachs-Antriebs-Hydromotors (14) über ein Ausgangs-Rückschlagventil (62) an den Druckspeicher (38) angeschlossen ist, und daß ein von Hand betätigbares, als 4/2-Wegeausgebildetes Lade-Steuerventil (61) vorgesehen ist, in dessen der Antriebs-Funktion des Hinterrad-Antriebs-Hydromotors (14) zugeordneter Grundstellung (O) der Druckmittel-Auslaß (33) dieses Hydromotors (14) mit dem Vorratsbehälter (36) der Hydraulik-Pumpe (13) verbunden, dieser aber gegen den Druckversorgungseingang (31) des Hydromotors (14) abgesperrt ist, und in dessen dem Ladebetrieb zugeordneter Funktionstellung (I) der Druckmittel-Auslaß (33) des Hydromotors (14) gegen den Vorratsbehälter (36) abgesperrt und dieser dafür mit dem Druckversorgungs-Eingang (31) des Hydromotors (14) verbunden ist.

**16.** Fahrrad nach Anspruch 15,
dadurch gekennzeichnet, daß das Lade-Steuerventil (61) als druckgesteuertes Ventil ausgebildet ist, das ab einem Mindestwert des Ausgangsdruckes des Druckspeichers (38) selbsttätig in seine Grundstellung (O) zurückgeschaltet wird.

**17.** Fahrrad nach einem der Ansprüche 9 bis 16,
dadurch gekennzeichnet, daß ein den Druck im Druckspeicher (38) anzeigendes Manometer (53) vorgesehen ist.


**Claims**

**1.** Bicycle with hydraulic driving device, which comprises a hydraulic pump, drivable in rotation by means of a pedal drive, and a hydraulic motor, driving the rear wheel of the bicycle, itself drivable in rotation by the flow of pressurized medium delivered by the hydraulic pump, wherein the pump, in an axi-symmetrical arrangement with respect to the axis of rotation of the pedal drive, comprises a plurality of pumping elements designed as piston pumps, each of which, within one 360° revolution of the pedal-driven pump rotor, alternately enters the delivery mode and the filling mode in successive sector ranges of the same azimuthal extension, characterized in that at least eight pumping elements (213a to 213h) are provided, each of which works at least three times in delivery mode within one revolution of the pump rotor (172) and that a gear selection device (270), implemented as a valve control device, is provided, by means of which, with the exception of one pumping element (213h) constantly used in delivery mode, the other pumping elements (213a to 213g) are switchable to bypass mode individually or in several increasing or decreasing numbers.

2.  Bicycle according to claim 1, characterized in that the delivery rate of the hydraulic pump (13), related to one revolution of the pump rotor (172), is increased by a defined factor q, which is between 1.2 and 1.6, preferentially by 1.4, by each switching of the pumping elements (213a to 213g) into the delivery mode.

3.  Bicycle according to claim 1 or claim 2, characterized in that the front wheel (17) of the bicycle (10) is also provided with a hydraulic driving motor (18), which is connectable on the drive side, controlled by a valve, to the pressure output (28) of the hydraulic pump (13) and is connected on the return side to its storage tank (36).

4.  Bicycle according to claim 3, characterized in that the absorption volume of the front wheel hydraulic driving motor (18) is between 40% and 80% and preferentially around 60% of the absorption volume of the hydraulic driving motor (14) of the rear wheel (16) of the bicycle (10).

5.  Bicycle according to one of claims 1 to 4, characterized in that the hydraulic pump (13) is designed as an axial piston pump, the pumping elements (213a to 213h) of which are designed as linear cylinders, the piston elements (217) of which are supported on an end surface (222) of a curved rib (223), pointing back and projecting in the axial direction, via supporting balls (218), which are freely pivoted, in step bearings (219) of the piston elements (217), wherein the piston elements (217) are pushed by pump springs (297) into the positions providing the support on the curved rib (223), that the pumping elements (213a to 213g) are provided with control valves designed as slide valves, the valve bodies (277 to 283) of which are designed as pressure-tight and sliding movable sleeves on the outside of the cylinder casings (216), in the normal positions of which radial valve holes (284) of the pumping element casing (216) are closed and which are bringable one after another into functional positions releasing the valve holes of the various pump casing elements (216) and are bringable successively, in the reverse order, into the normal positions closing the valve openings (284) once more by actuating a gear selection element (276).

6.  Bicycle according to claim 5, characterized in that the central axes of the valve openings (284), extending radially to the central longitudinal axis of each pumping element (213a to 213g), are arranged in a common plane (286), extending at right angles to the - central - axis of rotation (176) of the pump rotor (172), that a control ring (269) is arranged, movable axially inwards and outwards, inside the casing (173), (174) of the pump (13), the axial control movements of which are controllable by means of the actuating element (276) of the gear selection device (270), and that the valve bodies (277 to 283) have radial supporting and carrier flanges (288a to 288g), through the alternating engagement of which with the supporting and carrier flanges of the adjacent valve bodies, viewed in the circumferential direction, and through engagement of the control ring (269) with one of the valve body flanges, the opening and closing movements of the gear control valves are controllable (figure 8).

7.  Bicycle according to one of claims 1 to 6, characterized in that the absorption rate of its hydraulic driving motor (14), related to one revolution of the rear wheel (16) of the bicycle (10), is between 50% and 100%, preferentially around 75%, of the maximum delivery rate of the hydraulic pump (13), related to one revolution of the rotor (172) thereof.

8.  Bicycle according to one of claims 1 to 7, characterized in that the hydraulic driving motor (14) for the rear wheel (16) and, in the event of a connectable or more permanent all-wheel drive, the hydraulic driving motor (18) for the front wheel (17) of the bicycle (10) as well, are designed as axial piston hydraulic motors, the rotor (72) of which has a hub part (91, 304), projecting out of the casing (73), on which the rear wheel (16) and the front wheel (17) of the bicycle (10) are mountable by means of a dish-shaped central wheel part (301), in such a manner that the central plane (308) of the rear wheel (16), marked by the plane of the dish, coincides with the plane of the frame and the central plane (308) of the front wheel (17) contains its axis of rotation (311), which is marked by the central longitudinal axis of the steerer tube (22) of the bicycle frame (19).

9. Bicycle according to one of claims 1 to 8, characterized in that a high pressure accumulator (38), chargeable by actuating the pump (13), is provided, the output pressure level of which is at least 100 bar and preferentially 200 bar, and the storage volume of which is at least ten times, preferentially fifteen to twenty times the absorption rate, related to one revolution, of the hydraulic driving motor (14) provided for the rear wheel (16) and that said accumulator (38) is connectable as a driving energy source to at least the hydraulic driving motor (14) of the rear wheel (16) of the bicycle (10).

10. Bicycle according to claim 9, characterized in that the pressure output (28) of the hydraulic pump (13) is connected, via a first output non-return valve (29), to a first pressure supply line (32) leading to the pressure supply input (31) of the hydraulic motor (14) provided for the rear wheel (16) of the bicycle (10), that said pressure supply line (32) is blockable by manually actuating a 2/2-way valve (41), the normal position 0 of which is its flow position, that the pressure output (28) of the pump (13) is connected to the accumulator (38) via a second output non-return valve (37), and that a throttle valve (43), of variable, manually adjustable throttle cross-section, is connected between the accumulator (38) and the pressure supply input (31) of the rear wheel hydraulic driving motor (14), said throttle cross-section being variable between hermetic blocking of the accumulator (38) with respect to the hydraulic motor (14) and release of the full cross-section of the second pressure supply line (39) leading from the accumulator (38) to the motor (14) (figures 2 and 3).

11. Bicycle according to claim 10, characterized in that the throttle valve (43) is designed as a rotary slide valve, a grip on the handlebar (24) of the bicycle (10), designed as a twist grip (44), being utilized to actuate it.

12. Bicycle according to claim 10 or claim 11, characterized in that the accumulator (38) is manually actuatable by means of a further 2/2-way valve (49), and is blockable with respect to the common connection point (51) of the second output non-return valve (37) of the pump (13) and of the throttle valve (43).

13. Bicycle according to claim 12, characterized in that the normal position (O) of the further 2/2-way valve (49) is its flow position and its second functional position (I) is the blocking position.

14. Bicycle according to one of claims 9 to 13, characterized in that the accumulator (38) is chargeable by switching the hydraulic driving motor (14) allocated to the rear wheel (16) into braking mode.

15. Bicycle according to claim 14, characterized in that the pressurized medium outlet (33) of the rear axle hydraulic driving motor (14) is connected to the accumulator (38) via an output non-return valve (62), and that a manually actuatable charging control valve (61), designed as a 4/2-way valve, is provided in which the normal position (0) of which, allocated to the driving function of the rear wheel hydraulic driving motor (14), the pressurized medium outlet (33) of said hydraulic motor (14) is connected to the storage tank (36) of the hydraulic pump (13), although said storage tank (36) is blocked with respect to the pressure supply input (31) of the hydraulic motor (14), and in the functional position (I) of which, allocated to charging mode, the pressurized medium outlet (33) of the hydraulic motor (14) is blocked with respect to the storage tank (36) and said storage tank (36) is connected to the pressure supply input (31) of the hydraulic motor (14) for this purpose.

16. Bicycle according to claim 15, characterized in that the charging control valve (61) is designed as a pressure-controlled valve which is automatically switched back into its normal position (O) once the output pressure of the accumulator (38) reaches a minimum value.

17. Bicycle according to one of claims 9 to 16, characterized in that a pressure gauge (53), displaying the pressure in the accumulator (38), is provided.

**Revendications**

1. Cycle à commande hydraulique, comprenant une pompe hydraulique pouvant être entraînée en rotation au moyen d'un pédalier et un moteur hydraulique qui entraîne la roue arrière du cycle et est à son tour entraîné en rotation par le courant de fluide sous pression refoulé par la pompe hydraulique, ladite pompe comprenant, en une disposition axisymétrique par rapport à l'axe de rotation du pédalier, une pluralité d'éléments de pompe conformés en pompes à pistons dont chacun fonctionne alternativement, à l'intérieur d'une rotation de 360° du rotor de pompe entraîné par le pédalier, dans des secteurs successifs d'une même extension azimutale, en régime de refoulement et en régime de remplissage, **caractérisé en ce** qu'il comprend au moins huit éléments de pompe (213a à 213h) qui, à l'intérieur d'une rotation du rotor de pompe (172), travaillent chacun au moins trois fois en régime de refoulement, et comporte un sélecteur de positions de commutation (270) réalisé sous la forme d'un système de commande à soupapes à l'aide duquel tous les éléments de pompe (213a à 213g), à l'exception d'un élément de pompe (213h) fonctionnant en permanence en refoulement, peuvent être connectés, individuellement ou par groupes, en nombre croissant ou décroissant, en service de circulation.

2. Cycle selon la revendication 1, caractérisé en ce que chaque commutation de l'un des éléments de pompe (213a à 213g) en régime de refoulement a pour effet que le débit de la pompe hydraulique (13) rapporté à une rotation du rotor (172) est augmenté d'un facteur $q$ défini compris entre 1,2 et 1,6 et se situant de préférence à 1,4.

3. Cycle selon l'une des revendications 1 ou 2, caractérisé en ce que la roue avant (17) du cycle (10) est, elle aussi, équipée d'un moteur de commande hydraulique (18) qui peut être couplé du côté entraînement, par commande à soupapes, avec la sortie de pression (28) de la pompe hydraulique (13) et qui est raccordé, du côté retour, au réservoir (36) de celle-ci.

4. Cycle selon la revendication 3, caractérisé en ce que le volume absorbé par le moteur de commande hydraulique (18) pour l'entraînement de la roue avant est de 40 % à 80 %, et de préférence d'environ 60 %, du volume absorbé par le moteur de commande hydraulique (14) pour l'entraînement de la roue arrière (16) du cycle (10).

5. Cycle selon l'une des revendications 1 à 4, caractérisé en ce que la pompe hydraulique (13) est conformée en pompe à pistons axiaux dont les éléments de pompe (213a à 213h) sont réalisés sous la forme de cylindres linéaires dont les éléments de piston (217) s'appuient, par l'intermédiaire de billes d'appui (218) montées dans des coussinets (219) des éléments de piston (217) de manière à pouvoir tourner librement, sur une surface frontale (222) en saillie dans le sens axial et orientée vers l'arrière d'une nervure à came (223), les éléments de piston (217) étant poussés par des ressorts de pompe (297) dans des positions assurant l'appui sur la nervure à came (223), que les éléments de pompe (213a à 213g) comportent des vannes-pilotes conformées en soupapes à coulisse dont les corps de soupape (277 à 283) sont réalisés sous la forme de douilles qui peuvent coulisser extérieurement de manière étanche à la pression sur les carters (216) des cylindres et dans les positions de base desquelles des alésages de soupape (284) radiaux des carters d'éléments de pompe (216) sont obturés, et être amenées successivement, par l'actionnement d'un élément de sélection de position de commutation (276), dans des positions de fonctionnement qui libèrent les alésages de soupape des différents éléments de carter de pompe (216) et, successivement, dans l'ordre inverse, dans les positions de base dans lesquelles les orifices de soupape (284) sont à nouveau obturés.

6. Cycle selon la revendication 5, caractérisé en ce que les axes centraux des orifices de soupape (284) qui s'étendent radialement par rapport à l'axe médian longitudinal de l'élément de pompe respectif (213a à 213g) se situent dans un plan commun (286) qui s'étend orthogonalement par rapport à l'axe de rotation (176) - central - du rotor de pompe (172), qu'à l'intérieur du carter (173, 174) de la pompe (13), est disposée de manière axialement mobile dans les deux sens une bague de commande (269) dont les mouvements de commande axiaux peuvent être commandés au moyen de l'élément de manoeuvre (276) du sélecteur de positions de commutation (270), et que les corps de soupape (277 à 283) présentent des brides d'appui et d'entraînement radiales (288a à 288g) dont la coopération alternative avec les brides d'appui et d'entraînement des corps de soupape voisins, vus dans la direction circonférentielle, ainsi que la coopération de la bague de commande (269) avec l'une des brides des corps de soupape permettent de commander les mouvements d'ouverture et de fermeture des vannes- pilotes des positions de commutation (fig. 8).

7. Cycle selon l'une des revendications 1 à 6, caractérisé en ce que la quantité absorbée par le moteur de commande hydraulique (14) rapportée à un tour de la roue arrière (16) du cycle (10) est de 50 % à 100 %, de préférence d'environ 75 %, du débit de la pompe hydraulique (13) rapporté à une rotation du rotor (172) de ladite pompe hydraulique.

8. Cycle selon l'une des revendications 1 à 7, caractérisé en ce le moteur de commande hydraulique (14) pour l'entraînement de la roue arrière (16) et, dans le cas d'un système d'entraînement connectable ou permanent agissant sur les deux roues, aussi le moteur de commande hydraulique (18) pour la roue avant (17) du cycle (10) sont conformés en moteurs hydrauliques à pistons axiaux dont le rotor (72) comporte un élément de moyeu (91, 304) en saillie du carter (73) sur lequel peuvent être fixées, au moyen d'un élément de roue central (301) en forme de plat de roue, la roue arrière (16) et respectivement la roue avant (17) du cycle (10), de telle façon que le plan médian (308) de la roue arrière (16) marqué par le plan du plat de roue coïncide avec le plan du cadre et que le plan médian (308) de la roue avant (17) comprend l'axe de rotation (311) de celle-ci qui est marqué par l'axe médian longitudinal du tube de direction (22) du cadre (19) du cycle.

9. Cycle selon l'une des revendications 1 à 8, caractérisé en ce qu'il comprend un accumulateur de haute pression (38) pouvant être chargé au moins par l'actionnement de la pompe (13), dont le niveau de la pression de sortie est d'au moins 100 bars et de préférence de 200 bars, et dont la capacité d'accumulation est au moins égale à dix fois, de préférence à quinze à vingt fois, la quantité absorbée par le moteur de commande hydraulique (14) prévu pour l'entraînement de la roue arrière (16), rapportée à un tour, et que ledit accumulateur de pression (38) peut au moins être raccordé, comme source d'énergie d'entraînement, au moteur de commande hydraulique (14) de la roue arrière (16) du cycle (10).

10. Cycle selon la revendication 9, caractérisé en ce que la sortie de pression (28) de la pompe hydraulique (13) est reliée, par l'intermédiaire d'un premier clapet antiretour de sortie (29), à une première conduite d'alimentation en pression (32) menant à l'entrée d'alimentation en pression (31) du moteur de commande hydraulique (14) prévu pour la roue arrière (16) du cycle (10), que ladite conduite d'alimentation en pression (32) peut être bloquée par l'actionnement manuel d'un distributeur à 2/2 voies (41) dont la position de base (0) est la position de passage, que la sortie de pression (28) de la pompe (13) est reliée par l'intermédiaire d'un second clapet antiretour de sortie (37), à l'accumulateur de pression (38), et qu'entre l'accumulateur de pression (38) et l'entrée d'alimentation en pression (31) du moteur hydraulique (14) pour l'entraînement de la roue arrière, est insérée une soupape d'étranglement (43) à section d'étranglement variable et réglable à la main qui peut être variée entre l'isolement hermétique de l'accumulateur (38) par rapport au moteur hydraulique (14) et la libération de la pleine section de la seconde conduite d'alimentation en pression (39) qui mène de l'accumulateur (38) au moteur (14) (fig. 2 et 3).

11. Cycle selon la revendication 10, caractérisé en ce que la soupape d'étranglement (43) est conformée en vanne rotative qui peut être actionnée au moyen d'une poignée du guidon (24) du cycle (10), réalisée sous la forme d'une poignée tournante (44).

12. Cycle selon l'une des revendications 10 ou 11, caractérisé en ce que l'accumulateur (38) peut être isolé par rapport au point de branchement commun (51) du second clapet antiretour de sortie (37) de la pompe (13) et de la soupape d'étranglement (43), au moyen d'un distributeur à 2/2 voies (49) supplémentaire qui peut être actionné à la main.

13. Cycle selon la revendication 12, caractérisé en ce que la position de base (O) du distributeur à 2/2 voies supplémentaire (49) est la position de passage et que sa seconde position de fonctionnement (I) est la position de fermeture.

14. Cycle selon l'une des revendications 9 à 13, caractérisé en ce que l'accumulateur (38) peut être chargé en commutant le moteur de commande hydraulique (14) associé à la roue arrière (16), sur régime de freinage.

15. Cycle selon la revendication 14, caractérisé en ce que la sortie de fluide sous pression (33) du moteur de commande hydraulique (14) pour l'entraînement de la roue arrière communique, par l'intermédiaire d'un clapet antiretour de sortie (62), avec l'accumulateur de pression (38), et qu'il est prévu une vanne-pilote de charge (61) conformée en distributeur à 4/2 voies et pouvant être actionnée à la main, dans la position de base (O) de laquelle associée au moteur de commande hydraulique (14) de la roue arrière, la sortie de fluide sous pression (33) dudit moteur hydraulique (14) est reliée au réservoir (36) de la pompe hydraulique (13) alors que celui-ci est isolé par rapport à l'entrée d'alimentation en pression (31) du moteur hydraulique (14), et dans la position de fonctionnement (I) de laquelle associée au régime de charge, la sortie de fluide sous pression (33 du moteur hydraulique (14) est isolée par rapport au réservoir (36) lequel communique, en revanche, avec l'entrée d'alimentation en pression (31) du moteur hydraulique (14).

16. Cycle selon la revendication 15, caractérisé en ce que la vanne-pilote de charge (61) est conformée en soupape commandée par pression qui, à partir d'une valeur minimale de la pression de sortie de l'accumulateur de pression (38), est ramenée automatiquement dans sa position de base (O).

17. Cycle selon l'une des revendications 9 à 16, caractérisé en ce qu'il comprend un manomètre (53) qui indique la pression dans l'accumulateur de pression (38).

Fig. 1

EP 0 528 923 B1

Fig. 2

Fig.3

EP 0 528 923 B1

Fig. 4

Fig.5

EP 0 528 923 B1

27

# Fig. 6

Fig. 7

EP 0 528 923 B1

Fig. 8

Fig. 9